# EUROPEAN PATENT SPECIFICATION

(11) **EP 4 180 295 B1**
(45) Date of publication and mention of the grant of the patent: **07.10.2026**
(21) Application number: 21849900.2
(22) Date of filing: 22.07.2021
(51) Int. Cl.: G08G 1/16, B60W 40/00, B60W 40/10

(54) **METHOD AND DEVICE FOR RECOGNIZING VEHICLE MOTION STATE**
VERFAHREN UND VORRICHTUNG ZUR ERKENNUNG EINES FAHRZEUGBEWEGUNGSZUSTANDS
PROCÉDÉ ET DISPOSITIF PERMETTANT DE RECONNAÎTRE UN ÉTAT DE MOUVEMENT DE VÉHICULE

(30) Priority: 31.07.2020 CN 202010762012
(43) Date of publication of application: 17.05.2023
(73) Proprietor: Yinwang Intelligent Technologies Co., Ltd., Shenzhen, Guangdong 518129 (CN)
(72) Inventor: GONG, Shengbo, Shenzhen, Guangdong 518129 (CN); ZHOU, Wei, Shenzhen, Guangdong 518129 (CN)
(74) Representative: Pfenning, Meinig & Partner mbB
(86) International application number: PCT/CN2021/107918
(87) International publication number: WO 2022/022384

(56) References cited:
- WO-A1-2019/195187
- CN-A- 109 552 333
- CN-A- 109 583 151
- CN-A- 110 400 490
- CN-A- 110 789 528
- CN-A- 111 114 554
- CN-A- 111 169 476
- JP-A- 2005 062 912
- US-A1- 2017 210 379
- US-A1- 2018 046 191
- US-A1- 2018 284 785
- US-A1- 2019 389 464
- US-A1- 2020 265 710

## Description

### TECHNICAL FIELD

Embodiments of this application relate to the field of autonomous driving, and in particular, to a vehicle motion status identification method and apparatus.

### BACKGROUND

In the field of autonomous driving and assisted driving, a vehicle needs to acquire a motion status of another vehicle on a road in a timely and accurate manner, for example, whether the another vehicle changes lanes, so that the ego vehicle can perform operations such as route planning, adaptive cruise control, and proper deceleration in an emergency based on the motion status of the another vehicle. Therefore, during traveling, the vehicle needs to monitor the motion status of the another vehicle on the road.

Currently, a vehicle may collect, by using a sensor, information such as a turn signal of another vehicle, a horizontal distance between the another vehicle and a lane line of a lane in which the another vehicle is located, and a speed and an acceleration of the another vehicle, and predict a traveling track of the another vehicle based on the collected information. Then, the vehicle may identify, based on the predicted traveling track of the another vehicle, whether the another vehicle changes lanes. Alternatively, a vehicle may collect, by using a sensor, information such as lane line information of a lane in which another vehicle is located, a horizontal distance and a heading angle between the another vehicle and a lane line of the lane in which the another vehicle is located, and determine an actual traveling track of the another vehicle based on the collected information. Then, the ego vehicle may compare the actual traveling track of the another vehicle with a traveling track of a vehicle that keeps normal traveling in a lane in a vehicle traveling database. When a distance between the actual traveling track of the another vehicle and the traveling track of a vehicle that maintains normal traveling in a lane in the vehicle traveling database is greater than a specified threshold, the ego vehicle considers that the another vehicle changes a lane.

However, in the foregoing current manners of monitoring a motion status of another vehicle, when a vehicle predicts a traveling track of the another vehicle, or when a vehicle compares an actual traveling track of the another vehicle with a traveling track of a vehicle that keeps normal traveling in a lane in a vehicle traveling database, the ego vehicle is so sensitive to instantaneous kinematics information of the another vehicle that the ego vehicle is prone to misidentify the motion status of the another vehicle.
US 2018/284785 A1 discloses a method that determines a set of feasible trajectories of hypothetical vehicles traveling in a driving area of the host vehicle and determines a level of risk of each feasible trajectory as a combination of the probability of the feasible trajectory to intersect with the trajectory of the host vehicle and the probability of the feasible trajectory to be followed by at least one vehicle
US 2019/389464 A1 discloses a driving assistance method that detects a behavior of a moving object causing a blind spot area around a host vehicle, predicts a probability of action that the moving object takes when an obstacle is present in the blind spot area, according to a road structure around the host vehicle, and compares the behavior of the moving object with the probability of action that the moving object takes, so as to predict an action of the moving object.

### SUMMARY

The above problems are solved by the present invention as defined in the claims.
Embodiments of this application provide a vehicle motion status identification method and apparatus, to effectively reduce sensitivity to instantaneous kinematic information of another vehicle when a motion status of the another vehicle is monitored, and reduce misidentification of the motion status of the another vehicle. The invention as claimed in defined in the independent claims.

According to a first aspect, an embodiment of this application provides a vehicle motion status identification method. The method includes: obtaining first lane information, second lane information, and location information and motion information of a second vehicle, where the first lane information is lane information of a lane in which a first vehicle is located, and the second lane information includes at least two of lane information of a lane in which the second vehicle is located, lane information of a first adjacent lane of the lane in which the second vehicle is located, and lane information of a second adjacent lane of the lane in which the second vehicle is located; determining at least two predicted traveling tracks of the second vehicle based on the second lane information, and the location information and the motion information of the second vehicle, where each predicted traveling track is corresponding to each type of lane information included in the second lane information; and determining a motion status of the second vehicle relative to the first vehicle based on the at least two predicted traveling tracks and the first lane information.

The location information of the second vehicle may be a relative location of the second vehicle relative to the first vehicle, for example, relative location coordinates. Alternatively, the location information of the second vehicle may be an absolute location of the second vehicle. For example, actual (absolute) location coordinates of the second vehicle may be determined based on location coordinates of the first vehicle and relative location coordinates of the second vehicle relative to the first vehicle.

The motion information of the second vehicle may include kinematic information such as a speed, an acceleration, and a track curvature of the second vehicle.

That each predicted traveling track is corresponding to each type of lane information included in the second lane information means that, when the second lane information includes two types of lane information, two predicted traveling tracks that are in a one-to-one correspondence with two types of lane information may be determined. When the second lane information includes three types of lane information, three predicted traveling tracks that are in a one-to-one correspondence with the three types of lane information may be determined.

For example, when the second lane information includes the lane information of the lane in which the second vehicle is located and the lane information of the first adjacent lane of the lane in which the second vehicle is located, a predicted traveling track on which the second vehicle maintains traveling in the lane in which the second vehicle is currently located and a predicted traveling track on which the second vehicle changes lanes to the first adjacent lane of the lane in which the second vehicle is located may be determined correspondingly.

Alternatively, when the second lane information includes the lane information of the lane in which the second vehicle is located and the lane information of the second adjacent lane of the lane in which the second vehicle is located, a predicted traveling track on which the second vehicle maintains traveling in the lane in which the second vehicle is currently located and a predicted traveling track on which the second vehicle changes lanes to the second adjacent lane of the lane in which the second vehicle is located may be determined correspondingly.

Alternatively, when the second lane information includes the lane information of the first adjacent lane of the lane in which the second vehicle is located and the lane information of the second adjacent lane of the lane in which the second vehicle is located, a predicted traveling track on which the second vehicle changes lanes to the first adjacent lane of the lane in which the second vehicle is located and a predicted traveling track on which the second vehicle changes lanes to the second adjacent lane of the lane in which the second vehicle is located may be determined correspondingly.

Alternatively, when the second lane information includes all three of the lane information of the lane in which the second vehicle is located, the lane information of the first adjacent lane of the lane in which the second vehicle is located, and the lane information of the second adjacent lane of the lane in which the second vehicle is located, a predicted traveling track on which the second vehicle maintains traveling in the lane in which the second vehicle is currently located, a predicted traveling track on which the second vehicle changes lanes to the first adjacent lane of the lane in which the second vehicle is located, and a predicted traveling track on which the second vehicle changes lanes to the second adjacent lane of the lane in which the second vehicle is located may be determined correspondingly.

In this method, a traveling track of the second vehicle may be predicted based on the location information and the motion information of the second vehicle, and at least two types of the following: the lane information of the lane in which the second vehicle is located, the lane information of the first adjacent lane of the lane in which the second vehicle is located, and the lane information of the second adjacent lane of the lane in which the second vehicle is located, to obtain at least two predicted traveling tracks corresponding to the foregoing at least two types of lane information. Then, the motion status of the second vehicle relative to the first vehicle may be identified based on the foregoing at least two predicted traveling tracks and the lane information of the lane in which the first vehicle is located, so that sensitivity to instantaneous kinematic information of the second vehicle may be effectively reduced and misidentification of the motion status of the second vehicle may be reduced when the motion status of the second vehicle relative to the first vehicle is monitored.

The first vehicle may be understood as an ego vehicle of autonomous driving or assisted driving, and the second vehicle may be understood as another vehicle traveling on a road relative to the vehicle.

In the first aspect, the determining a motion status of the second vehicle relative to the first vehicle based on the at least two predicted traveling tracks and the first lane information includes: determining a target predicted traveling track of the second vehicle based on the at least two predicted traveling tracks and a similarity between each predicted traveling track and a historical traveling track of the second vehicle; and determining the motion status of the second vehicle relative to the first vehicle based on the target predicted traveling track and the first lane information.

In this design, the target predicted traveling track of the second vehicle is determined based on the at least two predicted traveling tracks and the similarity between each predicted traveling track and the historical traveling track of the second vehicle, so that the determined target predicted traveling track of the second vehicle may be closer to an actual traveling track of the second vehicle in the future. Therefore, accuracy of the motion status of the second vehicle relative to the first vehicle that is subsequently determined based on the target predicted traveling track and the first lane information is improved.

In the first aspect, before the determining a target predicted traveling track of the second vehicle based on the at least two predicted traveling tracks and a similarity between each predicted traveling track and a historical traveling track of the second vehicle, the method further includes: obtaining a first horizontal coordinate vector of the historical traveling track of the second vehicle in a first preset period, where the first horizontal coordinate vector is used to indicate a distance vector between the historical traveling track and a lane line of the lane in which the second vehicle is located; and obtaining a second horizontal coordinate vector of each predicted traveling track in a second preset period, and determining the similarity between each predicted traveling track and the historical traveling track based on the second horizontal coordinate vector and the first horizontal coordinate vector, where the second horizontal coordinate vector is used to indicate a distance vector between each predicted traveling track and the lane line of the lane in which the second vehicle is located.

The first horizontal coordinate vector of the historical traveling track of the second vehicle in the first preset period includes a plurality of first horizontal coordinates of the historical traveling track of the second vehicle in the first preset period. The second horizontal coordinate vector of each predicted traveling track in the second preset period includes a plurality of second horizontal coordinates of the predicted traveling track in the second preset period.

In some implementations, the first preset period may be a period including a plurality of consecutive first preset cycles, and each first preset cycle may include at least one first horizontal coordinate. The second preset period may be a period including a plurality of consecutive second preset cycles, and each second preset cycle may include at least one second horizontal coordinate.

Alternatively, in some other possible designs, a similarity between each of the foregoing at least two predicted traveling tracks and the historical traveling track of the second vehicle may be determined in another similarity calculation manner. This is not limited herein.

In a possible design, the determining a target predicted traveling track of the second vehicle based on the at least two predicted traveling tracks and a similarity between each predicted traveling track and a historical traveling track of the second vehicle includes: predicting a similarity between each predicted traveling track and an actual traveling track of the second vehicle based on the similarity between each predicted traveling track and the historical traveling track of the second vehicle; and determining the target predicted traveling track of the second vehicle based on the at least two predicted traveling tracks and the similarity between each predicted traveling track and the actual traveling track of the second vehicle.

For example, the similarity between each predicted traveling track and the historical traveling track of the second vehicle may be normalized, and a probability of each predicted traveling track may be predicted. The probability may indicate a similarity between each predicted traveling track and the actual traveling track of the second vehicle. The target predicted traveling track of the second vehicle is determined based on the at least two predicted traveling tracks and the probability of each predicted traveling track.

In this design, the similarity between each of the at least two predicted traveling tracks and the actual traveling track of the second vehicle is predicted, the foregoing at least two predicted traveling tracks may be comprehensively considered based on the similarity between each predicted traveling track and the actual traveling track of the second vehicle, to determine the target predicted traveling track of the second vehicle, and ensure better continuity of cutting or changing of the motion status of the second vehicle in the determined target predicted traveling track.

In a possible design, the determining the motion status of the second vehicle relative to the first vehicle based on the target predicted traveling track and the first lane information includes: determining a minimum horizontal distance that is between the target predicted traveling track and a lane line of the lane in which the first vehicle is located and that is within a preset vertical length based on the target predicted traveling track and the first lane information; and determining that the motion status of the second vehicle relative to the first vehicle is maintaining traveling in a different lane from the first vehicle if the minimum horizontal distance is greater than a first threshold.

In this design, whether the motion status of the second vehicle relative to the first vehicle is maintaining traveling in a different lane from the first vehicle may be determined by comparing the minimum horizontal distance between the target predicted traveling track and the lane line of the lane in which the first vehicle is located within the preset vertical length and the first threshold.

In a possible design, the method further includes: determining a maximum horizontal distance between the target predicted traveling track and the lane line of the lane in which the first vehicle is located within the preset vertical length based on the target predicted traveling track and the first lane information; and determining that the motion status of the second vehicle relative to the first vehicle is crossing the lane in which the first vehicle is located if the minimum horizontal distance is less than the first threshold and the maximum horizontal distance is greater than a second threshold, where the second threshold is greater than the first threshold; or determining that the motion status of the second vehicle relative to the first vehicle is maintaining traveling in the same lane as the first vehicle if the maximum horizontal distance is less than a third threshold, where the third threshold is less than the first threshold; or determining that the motion status of the second vehicle relative to the first vehicle is cutting into the lane in which the first vehicle is located or cutting out of the lane in which the first vehicle is located if the minimum horizontal distance is less than the first threshold, and the maximum horizontal distance is greater than the third threshold and less than the second threshold.

In this design, when the minimum horizontal distance between the target predicted traveling track and the lane line of the lane in which the first vehicle is located within the preset vertical length is less than the first threshold, the motion status of the second vehicle relative to the first vehicle may be further refined by comparing the maximum horizontal distance and the second threshold and the third threshold.

In a possible design, the method further includes: obtaining a first vertical location corresponding to the minimum horizontal distance and a second vertical location corresponding to the maximum horizontal distance; and the determining that the motion status of the second vehicle relative to the first vehicle is cutting into the lane in which the first vehicle is located or cutting out of the lane in which the first vehicle is located if the minimum horizontal distance is less than the first threshold, and the maximum horizontal distance is greater than the third threshold and less than the second threshold includes: determining that the motion status of the second vehicle relative to the first vehicle is cutting into the lane in which the first vehicle is located if a time at which the second vertical location appears is earlier than a time at which the first vertical location appears in the target predicted traveling track; or determining that the motion status of the second vehicle relative to the first vehicle is cutting out of the lane in which the first vehicle is located if a time at which the first vertical location appears is earlier than a time at which the second vertical location appears in the target predicted traveling track.

In this design, the motion status of the second vehicle relative to the first vehicle may be distinguished as cutting into or out of the lane in which the first vehicle is located based on a sequence of the time at which the first vertical location that corresponds to the minimum horizontal distance appears in the target predicted traveling track and the time at which the second vertical location that corresponds to the maximum horizontal distance appears.

In a possible design, the method further includes: obtaining a vertical distance between the first vertical location and a first end of the preset vertical length, where the vertical distance is a distance between the first vertical location and the first end of the preset vertical length in a direction parallel to the lane line of the lane in which the first vehicle is located, and the first end of the preset vertical length is an end close to the first vehicle; and determining that the motion status of the second vehicle relative to the first vehicle is cutting into the lane in which the first vehicle is located in a first cutting-in status or cutting out of the lane in which the first vehicle is located in a first cutting-out status if the vertical distance is less than a fourth threshold; or determining that the motion status of the second vehicle relative to the first vehicle is cutting into the lane in which the first vehicle is located in a second cutting-in status or cutting out of the lane in which the first vehicle is located in a second cutting-out status if the vertical distance is greater than the fourth threshold.

For example, the first cutting-in status may be referred to as a close cutting-in status, and the first cutting-out status may be referred to as a close cutting-out status. The second cutting-in status may be referred to as a general cutting-in status, and the second cutting-out status may be referred to as a general cutting-out status. Alternatively, the first/second cutting-in status and the first/second cutting-out status may be referred to as other names.

For example, the first cutting-in status is referred to as a close cutting-in status, the first cutting-out status is referred to as a close cutting-out status, the second cutting-in status is referred to as a general cutting-in status, and the second cutting-out status is referred to as a general cutting-out status. In this design, by comparing the vertical distance between the first vertical location and the first end of the preset vertical length and the fourth threshold, the motion status of the second vehicle relative to the first vehicle may be further refined from cutting into the lane in which the first vehicle is located to a close cutting-in or a general cutting-in, or the motion status of the second vehicle relative to the first vehicle may be refined from cutting out the lane in which the first vehicle is located to a close cutting-out or a general cutting-out.

In a possible design, the motion information of the second vehicle includes a horizontal speed of the second vehicle, and before the determining at least two predicted traveling tracks of the second vehicle based on the second lane information, and the location information and the motion information of the second vehicle, the method further includes: modifying the horizontal speed included in the motion information of the second vehicle based on an average historical horizontal speed of the second vehicle.

In this design, the horizontal speed included in the motion information of the second vehicle is modified based on the average historical horizontal speed of the second vehicle, so that disturbance caused by an excessively large instantaneous speed of a current horizontal speed when the predicted traveling track of the second vehicle is determined can be reduced.

According to a second aspect, an embodiment of this application provides a vehicle motion status identification apparatus. The apparatus includes: an obtaining module, configured to obtain first lane information, second lane information, and location information and motion information of a second vehicle, where the first lane information is lane information of a lane in which a first vehicle is located, and the second lane information includes at least two types of the following: lane information of a lane in which the second vehicle is located, lane information of a first adjacent lane of the lane in which the second vehicle is located, and lane information of a second adjacent lane of the lane in which the second vehicle is located; a prediction module, configured to determine at least two predicted traveling tracks of the second vehicle based on the second lane information, and the location information and the motion information of the second vehicle, wherein each predicted traveling track is corresponding to each type of the lane information included in the second lane information; and a determining module, configured to determine a motion status of the second vehicle relative to the first vehicle based on the at least two predicted traveling tracks and the first lane information.

The determining module is specifically configured to: determine a target predicted traveling track of the second vehicle based on the at least two predicted traveling tracks and a similarity between each predicted traveling track and a historical traveling track of the second vehicle; and determine the motion status of the second vehicle relative to the first vehicle based on the target predicted traveling track and the first lane information.

The determining module is further configured to: obtain a first horizontal coordinate vector of the historical traveling track of the second vehicle in a first preset period, where the first horizontal coordinate vector is used to indicate a distance vector between the historical traveling track and a lane line of the lane in which the second vehicle is located; and obtain a second horizontal coordinate vector of each predicted traveling track in a second preset period, and determine the similarity between each predicted traveling track and the historical traveling track based on the second horizontal coordinate vector and the first horizontal coordinate vector, where the second horizontal coordinate vector is used to indicate a distance vector between each predicted traveling track and the lane line of the lane in which the second vehicle is located.

In a possible design, the determining module is specifically configured to: predict a similarity between each predicted traveling track and an actual traveling track of the second vehicle based on the similarity between each predicted traveling track and the historical traveling track of the second vehicle; and determine the target predicted traveling track of the second vehicle based on the at least two predicted traveling tracks and the similarity between each predicted traveling track and the actual traveling track of the second vehicle.

In a possible design, the determining module is specifically configured to: determine a minimum horizontal distance that is between the target predicted traveling track and a lane line of the lane in which the first vehicle is located and that is within a preset vertical length based on the target predicted traveling track and the first lane information; and determine that the motion status of the second vehicle relative to the first vehicle is maintaining traveling in a different lane from the first vehicle if the minimum horizontal distance is greater than a first threshold.

In a possible design, the determining module is further configured to: determine a maximum horizontal distance between the target predicted traveling track and the lane line of the lane in which the first vehicle is located within the preset vertical length based on the target predicted traveling track and the first lane information; and determine that the motion status of the second vehicle relative to the first vehicle is crossing the lane in which the first vehicle is located if the minimum horizontal distance is less than the first threshold and the maximum horizontal distance is greater than a second threshold, where the second threshold is greater than the first threshold; or determine that the motion status of the second vehicle relative to the first vehicle is maintaining traveling in the same lane as the first vehicle if the maximum horizontal distance is less than a third threshold, where the third threshold is less than the first threshold; or determine that the motion status of the second vehicle relative to the first vehicle is cutting into the lane in which the first vehicle is located or cutting out of the lane in which the first vehicle is located if the minimum horizontal distance is less than the first threshold, and the maximum horizontal distance is greater than the third threshold and less than the second threshold.

In a possible design, the determining module is further configured to: obtain a first vertical location corresponding to the minimum horizontal distance and a second vertical location corresponding to the maximum horizontal distance; and determine that the motion status of the second vehicle relative to the first vehicle is cutting into the lane in which the first vehicle is located if the minimum horizontal distance is less than the first threshold, the maximum horizontal distance is greater than the third threshold and less than the second threshold, and a time at which the second vertical location appears is earlier than a time at which the first vertical location appears in the target predicted traveling track; or determine that the motion status of the second vehicle relative to the first vehicle is cutting out of the lane in which the first vehicle is located if a time at which the first vertical location appears is earlier than a time at which the second vertical location appears in the target predicted traveling track.

In a possible design, the determining module is further configured to: obtain a vertical distance between the first vertical location and a first end of the preset vertical length, where the vertical distance is a distance between the first vertical location and the first end of the preset vertical length in a direction parallel to the lane line of the lane in which the first vehicle is located, and the first end of the preset vertical length is an end close to the first vehicle; and determine that the motion status of the second vehicle relative to the first vehicle is cutting into the lane in which the first vehicle is located based on a first cutting-in status or cutting out of the lane in which the first vehicle is located in a first cutting-out status if the vertical distance is less than a fourth threshold; or determine that the motion status of the second vehicle relative to the first vehicle is cutting into the lane in which the first vehicle is located based on a second cutting-in status or cutting out of the lane in which the first vehicle is located based on a second cutting-out status if the vertical distance is greater than the fourth threshold.

In a possible design, the motion information of the second vehicle includes a horizontal speed of the second vehicle; and the prediction module is further configured to modify the horizontal speed included in the motion information of the second vehicle based on an average historical horizontal speed of the second vehicle.

According to a non-claimed third aspect, an embodiment of this application further provides a vehicle motion status identification apparatus. The apparatus includes: an interface circuit, configured to receive data transmitted by another apparatus; and a processor, connected to the interface circuit, and configured to perform the method according to any one of the first aspect or the possible designs of the first aspect.

According to a non-claimed fourth aspect, an embodiment of this application provides a vehicle, including a processor, where the processor is configured to connect to a memory, and invoke a program stored in the memory, to perform the method according to any one of the first aspect or the possible designs of the first aspect.

According to a non-claimed fifth aspect, an embodiment of this application provides a server, including a processor, where the processor is configured to connect to a memory, and invoke a program stored in the memory, to perform the method according to any one of the first aspect or the possible designs of the first aspect.

According to a non-claimed sixth aspect, an embodiment of this application provides a vehicle driving system, for example, may be an autonomous driving system or an assisted driving system, and includes a processor, where the processor is configured to connect to a memory and invoke a program stored in the memory, to perform the method according to any one of the first aspect or the possible designs of the first aspect.

According to a seventh aspect, an embodiment of this application provides a computer-readable storage medium, including computer software instructions. When the computer software instructions are run in a vehicle motion status identification apparatus or a chip built in the vehicle motion status identification apparatus, the vehicle motion status identification apparatus is enabled to perform the method according to any one of the first aspect or the possible designs of the first aspect.

According to a non-claimed eighth aspect, an embodiment of this application further provides a computer program product. When the computer program product is executed, the computer program product may implement the method according to any one of the first aspect or the possible designs of the first aspect.

According to a non-claimed ninth aspect, an embodiment of this application further provides a chip system. The chip system is applied to a vehicle, or a server, or a driving system, and the chip system includes one or more interface circuits and one or more processors. The interface circuit and the processor are interconnected through a line. The processor receives computer instructions from a memory of an electronic device through the interface circuit, and executes the computer instructions, to implement the method according to any one of the first aspect or the possible designs of the first aspect.

It may be understood that for beneficial effects that can be achieved by the second aspect to the ninth aspect, refer to the beneficial effects in any one of the first aspect and the possible designs of the first aspect. Details are not described herein again.

### BRIEF DESCRIPTION OF DRAWINGS

FIG. 1 is a schematic diagram of an application scenario according to an embodiment of this application;
FIG. 2 is a schematic diagram of a change of a motion status of a vehicle 2 relative to a vehicle 1;
FIG. 3 is a schematic diagram of a change of a motion status of a vehicle 4 relative to a vehicle 1;
FIG. 4 is a schematic diagram in which a vehicle A identifies a motion status of a vehicle B by predicting a traveling track of the vehicle B;
FIG. 5 is another schematic diagram in which a vehicle A identifies a motion status of a vehicle B by predicting a traveling track of the vehicle B;
FIG. 6 is a schematic diagram in which a vehicle A identifies a motion status of a vehicle B by comparing a traveling track of a vehicle that keeps normal traveling in a lane in a vehicle traveling database;
FIG. 7 is another schematic diagram in which a vehicle A identifies a motion status of a vehicle B by comparing a traveling track of a vehicle that keeps normal traveling in a lane in a vehicle traveling database;
FIG. 8 is a schematic diagram of components of a vehicle according to an embodiment of this application;
FIG. 9 is a schematic flowchart of a vehicle motion status identification method according to an embodiment of this application;
FIG. 10 is another schematic flowchart of a vehicle motion status identification method according to an embodiment of this application;
FIG. 11 is a schematic diagram in which a vehicle A identifies a motion status of a vehicle B based on a target predicted traveling track of the vehicle B according to an embodiment of this application;
FIG. 12 is another schematic diagram in which a vehicle A identifies a motion status of a vehicle B based on a target predicted traveling track of the vehicle B according to an embodiment of this application;
FIG. 13 is still another schematic diagram in which a vehicle A identifies a motion status of a vehicle B based on a target predicted traveling track of the vehicle B according to an embodiment of this application;
FIG. 14 is still another schematic diagram in which a vehicle A identifies a motion status of a vehicle B based on a target predicted traveling track of the vehicle B according to an embodiment of this application;
FIG. 15 is still another schematic diagram in which a vehicle A identifies a motion status of a vehicle B based on a target predicted traveling track of the vehicle B according to an embodiment of this application;
FIG. 16 is still another schematic diagram in which a vehicle A identifies a motion status of a vehicle B based on a target predicted traveling track of the vehicle B according to an embodiment of this application;
FIG. 17 is still another schematic diagram in which a vehicle A identifies a motion status of a vehicle B based on a target predicted traveling track of the vehicle B according to an embodiment of this application; and
FIG. 18 is a schematic diagram of a structure of a vehicle motion status identification apparatus according to an embodiment of this application.

### DESCRIPTION OF EMBODIMENTS

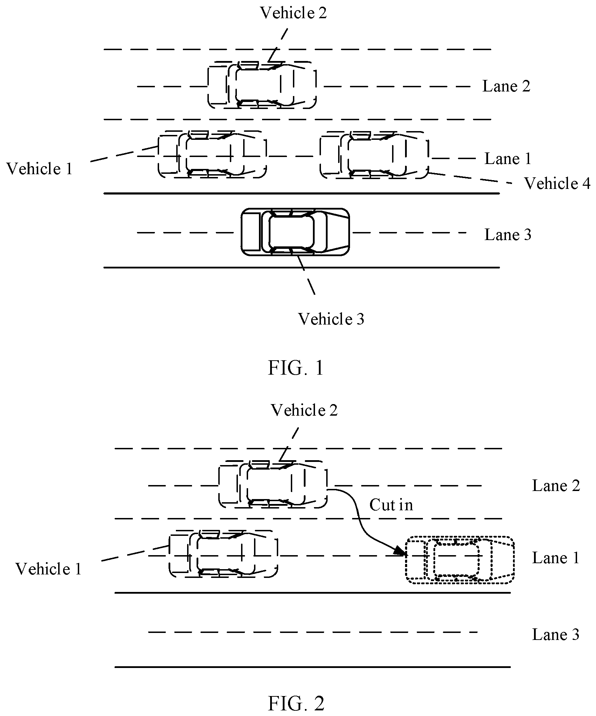

FIG. 1 is a schematic diagram of an application scenario according to an embodiment of this application.

As shown in FIG. 1, this application scenario of this embodiment of this application may include a plurality of vehicles traveling on a road. For example, four vehicles are shown in FIG. 1, including a vehicle 1, a vehicle 2, a vehicle 3, and a vehicle 4. Different vehicles may travel on different lanes. For example, the vehicle 1 travels on a lane 1, the vehicle 2 travels on a lane 2, and the vehicle 3 travels on a lane 3. Alternatively, different vehicles may travel on a same lane. For example, the vehicle 1 and the vehicle 4 both travel on the lane 1.

In the field of autonomous driving and assisted driving, for a vehicle in the application scenario shown in FIG. 1, the vehicle needs to acquire a motion status of another vehicle on the road in a timely and accurate manner, for example, whether the another vehicle changes a lane, to perform operations such as route planning, adaptive cruise control, and proper deceleration in an emergency for the ego vehicle based on the motion status of the another vehicle.

In the application scenario shown in FIG. 1, the vehicle 1 monitors a motion status of the vehicle 2. For example, FIG. 2 is a schematic diagram of a change of the motion status of the vehicle 2 relative to the vehicle 1. As shown in FIG. 2, during traveling of the vehicle 1 and the vehicle 2, the vehicle 2 may cut into a lane in which the vehicle 1 is located, for example, cut from the lane 2 to the lane 1. The vehicle 1 needs to monitor the change of the motion status of the vehicle 2 in time, to perform route planning, proper deceleration, and the like for the ego vehicle.

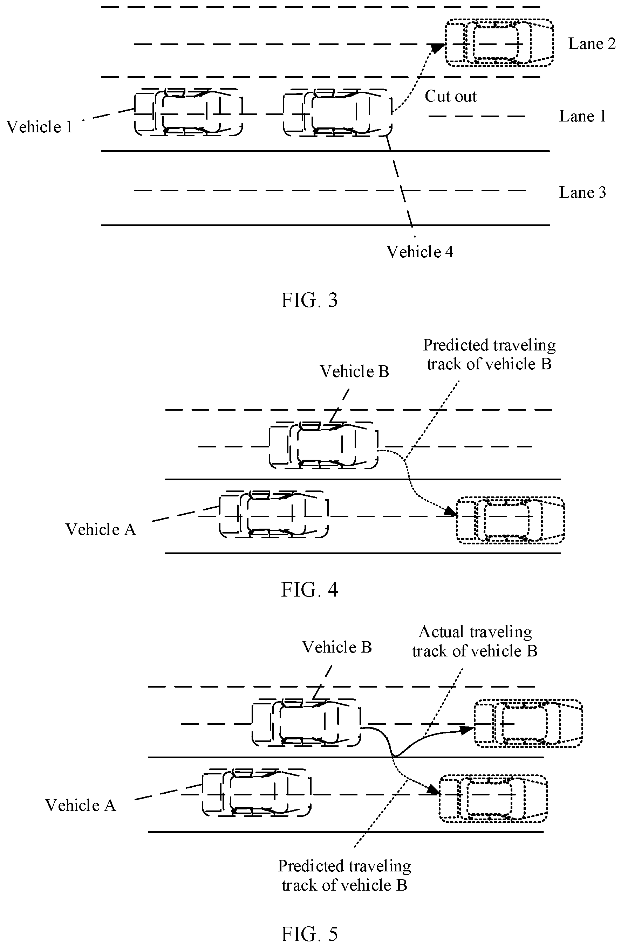

Alternatively, in the application scenario shown in FIG. 1, the vehicle 1 monitors a motion status of the vehicle 4. For example, FIG. 3 is a schematic diagram of a change of the motion status of the vehicle 4 relative to the vehicle 1. As shown in FIG. 3, during traveling of the vehicle 1 and the vehicle 4, the vehicle 4 may cut from a lane in which the vehicle 1 is located to another lane, for example, cut from the lane 1 to the lane 2. In this case, the vehicle 1 also needs to monitor the change of the motion status of the vehicle 4 in time, to perform route planning for the ego vehicle.

Currently, there are usually two manners of monitoring a motion status of another vehicle, as described in the following.

In a manner, a vehicle may collect, by using a sensor, information such as a turn signal of another vehicle, a horizontal distance between the another vehicle and a lane line of a lane in which the another vehicle is located, and a speed and an acceleration of the another vehicle, and predict a traveling track of the another vehicle based on the collected information. Then, the vehicle may identify, based on the predicted traveling track of the another vehicle, whether the another vehicle changes a lane.

For example, the another vehicle is a vehicle B, and the ego vehicle is a vehicle A. FIG. 4 is a schematic diagram in which the vehicle A identifies a motion status of the vehicle B by predicting a traveling track of the vehicle B. As shown in FIG. 4, when the vehicle A identifies, based on a predicted traveling track of the vehicle B, that the vehicle B travels out of a lane in which the vehicle B is located to another lane, the vehicle A may consider that the vehicle B may change lanes.

However, in this manner, when the ego vehicle predicts the traveling track of the another vehicle, the ego vehicle may be sensitive to instantaneous kinematic information of the another vehicle, and may misidentify the motion status of the another vehicle easily.

Similarly, for example, the another vehicle is a vehicle B, and the ego vehicle is a vehicle A. FIG. 5 is another schematic diagram in which the vehicle A identifies a motion status of the vehicle B by predicting a traveling track of the vehicle B. As shown in FIG. 5, when the vehicle B suddenly deviates due to an incorrect operation of a driver of the vehicle B, the vehicle A may identify, based on a predicted traveling track of the vehicle B, that the vehicle B may change lanes, but actually the vehicle B may keep traveling in an original lane. Therefore, the vehicle A misidentifies the motion status of the vehicle B.

In another manner, a vehicle may collect, by using a sensor, information such as lane line information of a lane in which another vehicle is located, a horizontal distance and a heading angle between the another vehicle and a lane line of the lane in which the another vehicle is located, and determine an actual traveling track of the another vehicle based on the collected information. Then, the vehicle may compare the actual traveling track of the another vehicle with a traveling track of a vehicle that keeps normal traveling in a lane in a vehicle traveling database. When a distance between the actual traveling track of the another vehicle and the traveling track of a vehicle that maintains normal traveling in a lane in the vehicle traveling database is greater than a specified threshold, the vehicle considers that the another vehicle changes a lane.

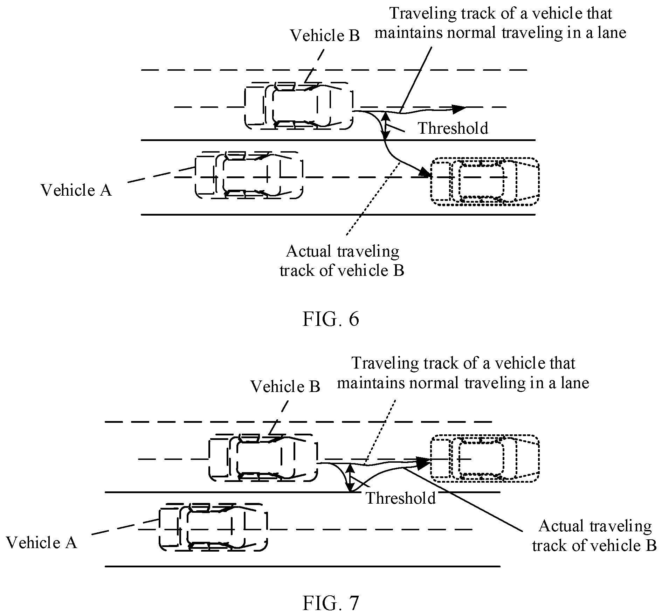

For example, the another vehicle is a vehicle B, and the ego vehicle is a vehicle A. FIG. 6 is a schematic diagram in which the vehicle A identifies a motion status of the vehicle B by comparing a traveling track of a vehicle that keeps normal traveling in a lane in a vehicle traveling database. As shown in FIG. 6, when the vehicle A identifies that a distance between an actual traveling track of the vehicle B and the traveling track of a vehicle that maintains normal traveling in a lane in the vehicle traveling database exceeds a specified threshold, the vehicle A may consider that the vehicle B may change lanes.

However, in this manner, when the ego vehicle compares the actual traveling track of the another vehicle with the traveling track of a vehicle that keeps normal traveling in a lane in the vehicle traveling database, the ego vehicle is sensitive to instantaneous kinematics information of the another vehicle, so the ego vehicle may misidentify the motion status of the another vehicle easily.

Similarly, for example, the another vehicle is a vehicle B, and the ego vehicle is a vehicle A. FIG. 7 is another schematic diagram in which the vehicle A identifies a motion status of the vehicle B by comparing a traveling track of a vehicle that keeps normal traveling in a lane in a vehicle traveling database. As shown in FIG. 7, when the vehicle B suddenly deviates due to an incorrect operation of a driver of the vehicle B, a distance between an actual traveling track of the vehicle B when the vehicle B deviates and the traveling track of a vehicle that keeps normal traveling in a lane in the vehicle traveling database may exceed a specific threshold. The vehicle A may identify that the vehicle B may change lanes, but actually the vehicle B may continue to travel in an original lane, so that the vehicle A misidentifies the motion status of the vehicle B.

It can be learned from the foregoing that, in current manners of identifying a motion status of another vehicle, an ego vehicle is sensitive to instantaneous kinematic information of the another vehicle, so the ego vehicle may misidentify a motion status of the another vehicle easily.

Based on this, an embodiment of this application provides a vehicle motion status identification method. According to this method, a traveling track of another vehicle may be predicted based on at least two types of the following: lane information of a lane in which the another vehicle is located, lane information of a first adjacent lane (for example, a left-side adjacent lane) of the lane in which the another vehicle is located, and lane information of a second adjacent lane (for example, a right-side adjacent lane) of the lane in which the another vehicle is located, combined with location information and motion information of the another vehicle, to obtain at least two predicted traveling tracks corresponding to the foregoing at least two types of lane information. Then, the motion status of the another vehicle relative to the ego vehicle may be identified based on the foregoing at least two predicted traveling tracks and lane information of a lane in which the ego vehicle is located. For example, whether the another vehicle may change lanes to the lane where the ego vehicle is located may be identified.

For example, the ego vehicle is a first vehicle and the another vehicle is a second vehicle. The vehicle motion status identification method may include: obtaining first lane information, second lane information, and location information and motion information of the second vehicle, where the first lane information is lane information of a lane in which the first vehicle is located, and the second lane information includes at least two types of the following: lane information of a lane in which the second vehicle is located, lane information of a first adjacent lane of the lane in which the second vehicle is located, and lane information of a second adjacent lane of the lane in which the second vehicle is located; determining at least two predicted traveling tracks of the second vehicle based on the second lane information, and the location information and the motion information of the second vehicle, where each predicted traveling track is corresponding to each type of the lane information included in the second lane information; and determining a motion status of the second vehicle relative to the first vehicle based on the at least two predicted traveling tracks and the first lane information.

In the vehicle motion status identification method provided in this embodiment of this application, the second lane information includes at least two types of the following: the lane information of the lane in which the second vehicle is located, the lane information of the first adjacent lane of the lane in which the second vehicle is located, and the lane information of the second adjacent lane of the lane in which the second vehicle is located, so the at least two predicted traveling tracks that are in a one-to-one correspondence with each type of the lane information included in the second lane information may be determined with reference to the location information and the motion information of the second vehicle. When the motion status of the second vehicle relative to the first vehicle is determined based on the at least two predicted traveling tracks and the first lane information, the at least two predicted traveling tracks may perform mutual correction, to reduce sensitivity to instantaneous kinematic information of the second vehicle, so as to avoid misidentification of the motion status of the second vehicle relative to the first vehicle due to an instantaneous change of the kinematic information of the second vehicle.

The following describes an example of the vehicle motion status identification method provided in this embodiment of this application.

It should be noted that in the description of this application, terms such as "first" and "second" are merely used for distinguishing description, and are not intended to specifically limit a feature. In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In this application, "at least one" means one or more, and "a plurality of" means two or more.

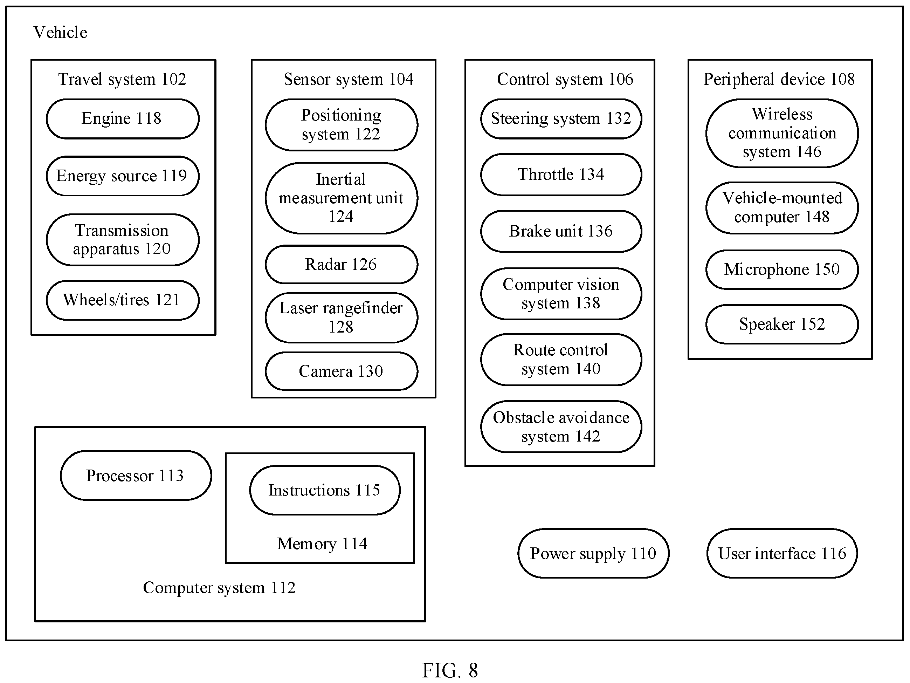

FIG. 8 is a schematic diagram of components of a vehicle according to an embodiment of this application. As shown in FIG. 8, the vehicle may include various subsystems, for example, a travel system 102, a sensor system 104, a control system 106, one or more peripheral devices 108, a power supply 110, a computer system 112, a user interface 116, and the like.

Optionally, the vehicle may include more or fewer subsystems, and each subsystem may include a plurality of elements. In addition, all the subsystems and elements of the vehicle may be interconnected in a wired or wireless manner.

The travel system 102 may include a component that provides power to the vehicle for moving. In an embodiment, the travel system 102 may include an engine 118, an energy source 119, a transmission apparatus 120, and wheels/tires 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other oil-based fuels, propane, other compressed gas-based fuels, ethanol, solar panels, batteries, and other power sources. The energy source 119 may also provide energy for another system of the vehicle.

The transmission apparatus 120 may transmit mechanical power from the engine 118 to the wheels 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more wheels 121.

The sensor system 104 may include several sensors that can sense information about an ambient environment of the vehicle. For example, the sensor system 104 may include a positioning system 122 (the positioning system 122 may be a GPS system, a BeiDou system, or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an engine oil thermometer) of an internal system of the vehicle. Sensor data from one or more of these sensors may be used to detect an object and corresponding characteristics (a position, a shape, a direction, a speed, and the like) of the object.

The positioning system 122 may be configured to estimate a geographic location of the vehicle. The IMU 124 is configured to sense a position and an orientation change of the vehicle based on an inertial acceleration. In an embodiment, the IMU 124 may be a combination of an accelerometer and a gyroscope.

The radar 126 may sense an object in the ambient environment of the vehicle through a radio signal. In some embodiments, in addition to sensing an object, the radar 126 may further be configured to sense a speed and/or a moving direction of the object.

The laser rangefinder 128 may sense, by using a laser, an object in an environment in which the vehicle is located. In some embodiments, the laser rangefinder 128 may include one or more laser sources, a laser scanner, one or more detectors, and another system component.

The camera 130 may be configured to capture a plurality of images of the ambient environment of the vehicle. The camera 130 may be a static camera or a video camera.

The control system 106 is an operating system that controls the vehicle and components of the vehicle. The control system 106 may include a steering system 132, a throttle 134, a brake unit 136, a computer vision system 138, a route control system 140, and an obstacle avoidance system 142.

The steering system 132 may be operated to adjust a moving direction of the vehicle. For example, in an embodiment, the steering system 132 may be a steering wheel system.

The throttle 134 is configured to control an operating speed of the engine 118 and further control a speed of the vehicle.

The brake unit 136 is configured to control the vehicle to decelerate. The brake unit 136 may use friction to slow down the wheels 121. In another embodiment, the brake unit 136 may convert kinetic energy of the wheels 121 into a current. Alternatively, the brake unit 136 may reduce a rotational speed of the wheels 121 in another form to control the speed of the vehicle.

The computer vision system 138 may be operated to process and analyze an image captured by the camera 130, to recognize an object and/or a feature in the ambient environment of the vehicle. The object and/or the feature may include a traffic signal, a road boundary, and an obstacle. The computer vision system 138 may use an object recognition algorithm, a structure from motion (structure from motion, SFM) algorithm, video tracking, and another computer vision technology. In some embodiments, the computer vision system 138 may be configured to draw a map for an environment, track an object, estimate a speed of the object, and the like.

The route control system 140 is configured to determine a travel route of the vehicle. In some embodiments, the route control system 140 may combine data from the sensor 104, and one or more predetermined maps to determine the travel route of the vehicle.

The obstacle avoidance system 142 is configured to identify, evaluate, and avoid or bypass a potential obstacle in the environment of the vehicle in another manner.

Certainly, in an example, the control system 106 may add or alternatively include components in addition to those shown and described. Alternatively, the control system 106 may remove some of the components shown above.

The vehicle interacts with an external sensor, another vehicle, another computer system, or a user through the peripheral device 108. The peripheral device 108 may include a wireless communication system 146, a vehicle-mounted computer 148, a microphone 150, and/or a speaker 152.

In some embodiments, the peripheral device 108 provides a means for the user of the vehicle to interact with the user interface 116. For example, the vehicle-mounted computer 148 may provide information to the user of the vehicle 100. The user interface 116 may further operate the vehicle-mounted computer 148 to receive an input from the user. The vehicle-mounted computer 148 may perform an operation by using a touchscreen. In another case, the peripheral device 108 may provide a means for the vehicle to communicate with another device located in the vehicle. For example, the microphone 150 may receive audio (for example, a voice command or another audio input) from the user of the vehicle. Likewise, the speaker 152 may output audio to the user of the vehicle.

The wireless communication system 146 may wirelessly communicate with one or more devices directly or through a communications network. For example, the wireless communication system 146 may perform communication through a 3G cellular network, such as code division multiple access (code division multiple access, CDMA), EVDO, or GSM/GPRS, perform communication through a 4G cellular network, such as LTE, or perform communication through a 5G cellular network. The wireless communication system 146 may communicate with a wireless local area network (wireless local area network, WLAN) by using Wi-Fi. In some embodiments, the wireless communication system 146 may directly communicate with a device by using an infrared link, Bluetooth, or ZigBee. Other wireless protocols, for example, various vehicle communication systems, such as the wireless communication system 146, may include one or more dedicated short range communications (dedicated short range communications, DSRC) devices, and these devices may include public and/or private data communication between the vehicle and/or roadside stations.

The power supply 110 may supply power to various components of the vehicle. In an embodiment, the power supply 110 may be a rechargeable lithium-ion or lead-acid battery. One or more battery packs of such a battery may be configured as a power supply to supply power to the various components of the vehicle. In some embodiments, the power supply 110 and the energy source 119 may be implemented together, for example, in some pure electric vehicles.

Some or all of functions of the vehicle are controlled by the computer system 112. The computer system 112 may include at least one processor 113, and the processor 113 executes instructions 115 stored in a non-transient computer-readable medium such as a memory 114. The computer system 112 may alternatively be a plurality of computing devices that control individual components or subsystems of the vehicle in a distributed manner.

The processor 113 may be any conventional processor, for example, a commercially available CPU. Alternatively, the processor may be a dedicated device such as an ASIC or another hardware-based processor. Although FIG. 8 functionally illustrates the processor and the memory, a person of ordinary skill in the art should understand that the processor or the memory may actually include a plurality of processors or memories that may or may not be stored in a same physical housing. For example, the memory may be a hard disk drive or another storage medium located in a different physical housing. Therefore, a reference to the processor is understood as including a reference to a set of processors or memories that may or may not operate in parallel. Different from using a single processor to perform the steps described herein, some components, such as a steering component and a deceleration component, each may include a respective processor that performs only computation related to a component-specific function.

In various aspects described herein, the processor may be located far away from the vehicle and communicate wirelessly with the vehicle. In another aspect, some processes described herein are performed on a processor disposed inside the vehicle, while others are performed by a remote processor, including taking steps necessary for single manipulation.

In some embodiments, the memory 114 may include the instructions 11 (for example, program logic), and the instructions 115 may be executed by the processor 113 to perform various functions of the vehicle, including the functions described above. The memory 114 may further include additional instructions, including instructions for sending send data to, receiving data from, interacting with, and/or controlling one or more of the travel system 102, the sensor system 104, the control system 106, and the peripheral device 108.

In addition to the instructions 115, the memory 114 may further store data, such as a road map, route information, a location, a direction, a speed, and other such vehicle data of a vehicle, and other information. Such information may be used by the vehicle and the computer system 112 when the vehicle operates in an autonomous mode, a semi-autonomous mode, and/or a manual mode.

The user interface 116 is used to provide information to or receive information from the user of the vehicle. Optionally, the user interface 116 may include one or more input/output devices in a set of peripheral devices 108, for example, the wireless communication system 146, the vehicle-mounted computer 148, the microphone 150, and the speaker 152.

The computer system 112 may control functions of the vehicle based on input received from various subsystems (for example, the travel system 102, the sensor system 104, and the control system 106) and from the user interface 116. For example, the computer system 112 may access and use input from the control system 106 to control the steering unit 132 to avoid an obstacle detected by the sensor system 104 and the obstacle avoidance system 144. In some embodiments, the computer system 112 may be operated to provide control over many aspects of the vehicle 100 and the subsystems of the vehicle 100.

Optionally, one or more of the foregoing components may be installed separately from or associated with the vehicle. For example, the memory 114 may exist partially or completely separate from the vehicle. The foregoing components may be communicatively coupled together in a wired and/or wireless manner.

Optionally, the foregoing components are merely examples. In actual application, components in the foregoing modules may be added or deleted based on an actual requirement. FIG. 8 should not be understood as any limitation on this embodiment of this application.

An autonomous vehicle traveling on a road, such as the vehicle, may identify an object in an ambient environment of the vehicle to determine to adjust a current speed. The object may be another vehicle, a traffic control device, or another object of another type. In some examples, each recognized object may be considered independently, and based on features of each object, such as a current speed of the object, an acceleration of the object, and a spacing between the object and the vehicle, may be used to determine the speed to be adjusted by the autonomous vehicle.

Optionally, the vehicle or the computing device associated with the vehicle (such as the computer system 112, the computer vision system 138, and the processor 113 in FIG. 8) may predict behavior of an identified object based on features of the identified object and statuses of the ambient environment (for example, traffic, rain, or ice on the road). Optionally, each of the identified objects depends on behavior of each other, and therefore all the identified objects may be considered together to predict behavior of a single identified object. The vehicle can adjust the speed of the vehicle based on the predicted behavior of the identified object. In other words, the vehicle can determine, based on the predicted behavior of the object, a stable state to which the vehicle needs to be adjusted (for example, acceleration, deceleration, or stop). In this process, another factor, for example, a horizontal location of another vehicle on a road on which the another vehicle moves, a curvature of the road, or proximity between static and dynamic objects, may also be considered, to determine the speed of the vehicle.

Optionally, the vehicle shown in FIG. 8 may be a car, a truck, a motorcycle, a bus, a playground vehicle, or the like that has a capability of traveling on a public road and a highway with or without a driver. This is not particularly limited in this embodiment of this application.

In an example embodiment, the vehicle motion status identification method provided in this embodiment of this application may be applied to the vehicle shown in FIG. 8, for example, may be performed by a processor in the vehicle, or may be performed by a computer system. Alternatively, in another example embodiment, the vehicle motion status identification method provided in this embodiment of this application may also be applied to a server communicatively connected to the vehicle shown in FIG. 8, for example, a cloud server. The server may remotely control the vehicle to perform autonomous driving. An application subject of the vehicle motion status identification method is not limited in this application.

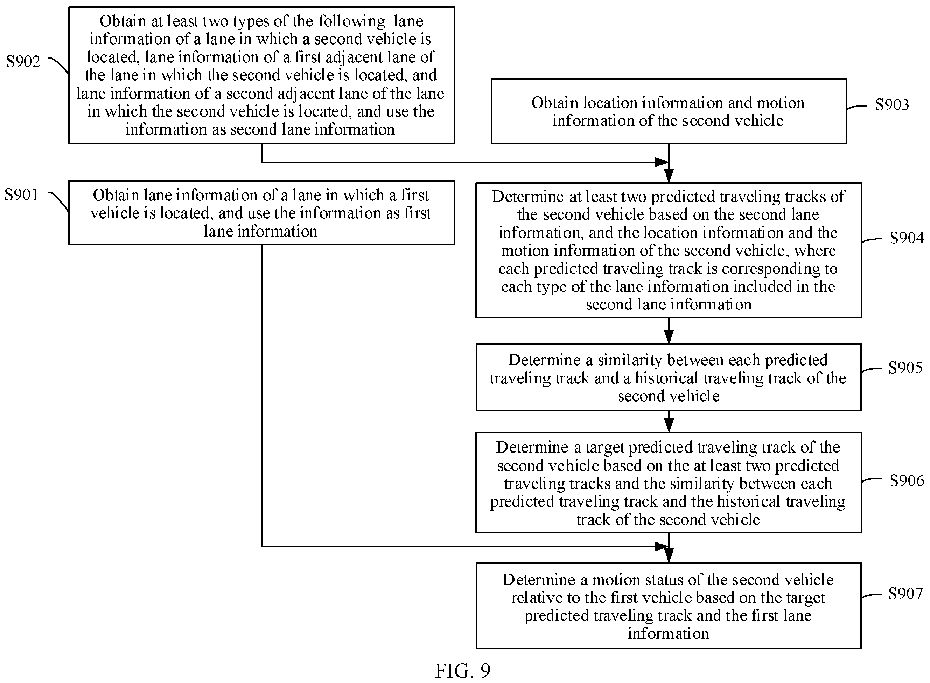

Similarly, for example, the ego vehicle is a first vehicle and the another vehicle is a second vehicle. FIG. 9 is a schematic flowchart of a vehicle motion status identification method according to an embodiment of this application.

As shown in FIG. 9, in the method, S901 to S903 may be first performed to obtain first lane information, second lane information, and location information and motion information of the second vehicle.

S901: Obtain lane information of a lane in which the first vehicle is located, and use the information as the first lane information.

The lane information of the lane in which the first vehicle is located is track information of a lane central axis of the lane in which the first vehicle is located. For example, the first vehicle is the vehicle 1 shown in FIG. 1. The lane information of the lane in which the vehicle 1 is located is a track (shown by a dashed line in FIG. 1) of a lane central axis of the lane 1.

The following describes a process of obtaining the first lane information.

The first lane information may be represented by using the following curve expression. ${y}_{ego , t} \left(x\right) = {a}_{3 , t} {x}^{3} + {a}_{2 , t} {x}^{2} + {a}_{1 , t} x + {a}_{0 , t}$

In this expression, a_{3,t} represents one-sixth of a curvature change rate of a track of the lane central axis at a moment t in the first lane information; a_{2,t} represents one half of a curvature of the track of the lane central axis in the first lane information at the moment t; a_{1,t} represents a tangent slope of the track of the lane central axis at the moment t in the first lane information; and a_{0,t} represents a horizontal offset of the track of the lane central axis at the moment t in the first lane information.

The track of the lane central axis of the lane on which the first vehicle is located is fitted according to the foregoing curve expression, to obtain the lane information of the lane in which the first vehicle is located, that is, the first lane information.

S902: Obtain at least two types of the following: lane information of a lane in which the second vehicle is located, lane information of a first adjacent lane of the lane in which the second vehicle is located, and lane information of a second adjacent lane of the lane in which the second vehicle is located, and use the information as the second lane information.

For example, in an implementation, the second lane information may include the lane information of the lane in which the second vehicle is located and the lane information of the first adjacent lane in which the second vehicle is located. In another implementation, the second lane information may include the lane information of the lane in which the second vehicle is located and the lane information of the second adjacent lane in which the second vehicle is located. In still another implementation, the second lane information may include the lane information of the first adjacent lane of the lane in which the second vehicle is located and the lane information of the second adjacent lane of the lane in which the second vehicle is located. Alternatively, the second lane information may include all three types of the lane information of the lane in which the second vehicle is located, the lane information of the first adjacent lane of the lane in which the second vehicle is located, and the lane information of the second adjacent lane of the lane in which the second vehicle is located.

The lane information of the lane in which the second vehicle is located is track information of a lane central axis of the lane in which the second vehicle is located, the lane information of the first adjacent lane of the lane in which the second vehicle is located is track information of a lane central axis of the first adjacent lane of the lane in which the second vehicle is located, and the lane information of the second adjacent lane of the lane in which the second vehicle is located is track information of a lane central axis of the second adjacent lane of the lane in which the second vehicle is located.

As shown in FIG. 1, for example, the second vehicle is the vehicle 4. The first adjacent lane of the lane (the lane 1) in which the vehicle 4 is located is the lane 2, and the second adjacent lane is the lane 3, or the first adjacent lane is the lane 3, and the second adjacent lane is the lane 2. In other words, the first adjacent lane and the second adjacent lane are left-side and right-side adjacent lanes of the lane in which the vehicle 4 is located. The lane information of the lane 1, the lane 2, and the lane 3 is respectively tracks of lane central axes corresponding to the lane 1, the lane 2, and the lane 3.

The following describes a process of obtaining the second lane information.

The second lane information may be represented by using the following curve expression: ${y}_{i , t} \left(x\right) = {{b}^{i}}_{3 , t} {x}^{3} + {{b}^{i}}_{2 , t} {x}^{2} + {{b}^{i}}_{1 , t} x + {{b}^{i}}_{0 , t} , i = 0 , 1 , 2 .$

When i = 0, y_{i,t}(x) is y_{0,t}(x), which represents the lane information of the lane in which the second vehicle is located. When i = 1, y_{i,t}(x) is y_{1,t}(x), which represents the lane information of the first adjacent lane of the lane in which the second vehicle is located. When i = 2, y_{i,t}(x) is y_{2,t}(x), which represents the lane information of the second adjacent lane of the lane in which the second vehicle is located. bⁱ_{3,t} represents one-sixth of a curvature change rate of a track of a lane central axis at a moment t in lane information corresponding to i; bⁱ_{2,t} represents one half of a curvature of the track of the lane central axis at the moment t in the lane information corresponding to i; bⁱ_{1,t} represents a tangent slope of the track of the lane central axis at the moment t in the lane information corresponding to i; and bⁱ_{0,t} represents a horizontal offset of the track of the lane central axis at the moment t in the lane information corresponding to i.

It should be noted that if the first adjacent lane (for example, the left-side lane) does not exist for the lane in which the second vehicle is located, in the curve expression of the second lane information, corresponding parameter coefficients such as bⁱ_{3,t}, bⁱ_{2,t}, bⁱ_{1,t}, and bⁱ_{0,t} when i is equal to 1 are all 255; or if the second adjacent lane (for example, the right-side lane) does not exist for the lane in which the second vehicle is located, in the curve expression of the second lane information, corresponding parameter coefficients such as bⁱ_{3,t}, bⁱ_{2,t}, bⁱ_{1,t}, and bⁱ_{0,t} when i is equal to 2 are all 255.

The track of the lane central axis of the lane in which the second vehicle is located, the track of the lane central axis of the first adjacent lane of the lane in which the second vehicle is located, and the track of the lane central axis of the second adjacent lane of the lane in which the second vehicle is located are fitted according to the curve expression, to obtain the corresponding lane information of the lane in which the second vehicle is located, the lane information of the first adjacent lane of the lane in which the second vehicle is located, and the lane information of the second adjacent lane of the lane in which the second vehicle is located.

S903: Obtain the location information and the motion information of the second vehicle.

Optionally, a sensor system (for example, a radar or a distance sensor) and a positioning system (for example, a GPS or a BeiDou) on the first vehicle may collect the location information and the motion information of the second vehicle based on a fixed cycle, and upload the location information and the motion information of the second vehicle to the first vehicle. The location information of the second vehicle refers to location information (xₜ, yₜ, θₜ) of the second vehicle at a moment t in each cycle (where xₜ represents a horizontal coordinate of the second vehicle, yₜ represents a vertical coordinate of the second vehicle, and θₜ represents a heading angle of the second vehicle). The location information of the second vehicle may be a relative location of the second vehicle relative to the first vehicle, or may be an absolute location of the second vehicle. The motion information of the second vehicle refers to kinematic information such as a speed v_{x,t}, an acceleration a_{x,t}, and a track curvature γₜ of the second vehicle at the moment t in each cycle.

It should be noted that a sequence of performing S901, S902, and S903 is not limited in this application. S901, S902, and S903 may be performed concurrently, or one of S901, S902, and S903 may be performed first or later.

After the first lane information, the second lane information, and the location information and the motion information of the second vehicle are obtained through the foregoing S901 to S903, a motion status of the second vehicle relative to the first vehicle may be determined through the following S904 to S907.

S904: Determine at least two predicted traveling tracks of the second vehicle based on the second lane information, and the location information and the motion information of the second vehicle, where each predicted traveling track is corresponding to each type of the lane information included in the second lane information.

For example, when the second lane information includes the lane information of the lane in which the second vehicle is located and the lane information of the first adjacent lane of the lane in which the second vehicle is located, a predicted traveling track on which the second vehicle maintains traveling in the lane in which the second vehicle is currently located and a predicted traveling track on which the second vehicle changes lanes to the first adjacent lane of the lane in which the second vehicle is located may be determined correspondingly.

Alternatively, when the second lane information includes the lane information of the lane in which the second vehicle is located and the lane information of the second adjacent lane of the lane in which the second vehicle is located, a predicted traveling track on which the second vehicle maintains traveling in the lane in which the second vehicle is currently located and a predicted traveling track on which the second vehicle changes lanes to the second adjacent lane of the lane in which the second vehicle is located may be determined correspondingly.

Alternatively, when the second lane information includes the lane information of the first adjacent lane of the lane in which the second vehicle is located and the lane information of the second adjacent lane of the lane in which the second vehicle is located, a predicted traveling track on which the second vehicle changes lanes to the first adjacent lane of the lane in which the second vehicle is located and a predicted traveling track on which the second vehicle changes lanes to the second adjacent lane of the lane in which the second vehicle is located may be determined correspondingly.

Alternatively, when the second lane information includes all three of the lane information of the lane in which the second vehicle is located, the lane information of the first adjacent lane of the lane in which the second vehicle is located, and the lane information of the second adjacent lane of the lane in which the second vehicle is located, a predicted traveling track on which the second vehicle maintains traveling in the lane in which the second vehicle is currently located, a predicted traveling track on which the second vehicle changes lanes to the first adjacent lane of the lane in which the second vehicle is located, and a predicted traveling track on which the second vehicle changes lanes to the second adjacent lane of the lane in which the second vehicle is located may be determined correspondingly.

The following describes a specific manner of determining a predicted traveling track by using an example in which the second lane information includes all three types of the lane information of the lane in which the second vehicle is located, the lane information of the first adjacent lane of the lane in which the second vehicle is located, and the lane information of the second adjacent lane of the lane in which the second vehicle is located.
(1) For the predicted traveling track on which the second vehicle maintains traveling in the lane in which the second vehicle is currently located,
   it is assumed that the second vehicle adjusts a steering wheel and a speed from a current location to return to a vicinity of the lane central axis of the lane in which the second vehicle is located, a path on which the second vehicle maintains traveling in the lane in which the second vehicle is currently located may be planned by using polynomial fitting.

For example, based on six conditions, such as a current location of the second vehicle, a heading angle, a path curvature, and a horizontal location, a first-order compatibility, and a second-order compatibility that are satisfied by the lane central axis of the second vehicle returning to the lane in which the second vehicle is located, the following equation (or may be referred to as a polynomial fitting model) may be obtained by performing quadratic polynomial fitting to represent the predicted traveling track on which the second vehicle maintains traveling in the lane in which the second vehicle is currently located: ${z}_{0 , t} \left(x\right) = {{c}^{0}}_{4 , t} {x}^{4} + {{c}^{0}}_{3 , t} {x}^{3} + {{c}^{0}}_{2 , t} {x}^{2} + {{c}^{0}}_{1 , t} x + {{c}^{0}}_{0 , t}$

The polynomial meets a following condition: $\left\{\begin{matrix}{z}_{0 , t} \left({x}_{t}\right) = {y}_{t} & z {′}_{0 , t} \left({x}_{t}\right) = tan \left({θ}_{t}\right) & z {"}_{0 , t} \left({x}_{t}\right) = {γ}_{t} {\left(1+{tan}^{2}\left({θ}_{t}\right)\right)}^{\frac{3}{2}} \\ {z}_{0 , t} \left({x}_{T}\right) = {y}_{0 , t} \left({x}_{T}\right) , & z {′}_{0 , t} \left({x}_{T}\right) = y {′}_{0 , t} \left({x}_{T}\right) & z {"}_{0 , t} \left({x}_{T}\right) = y {"}_{0 , t} \left({x}_{T}\right)\end{matrix}\right.$

In the foregoing equation, five parameters, such as c⁰_{4,t}, c⁰_{3,t}, c⁰_{2,t}, c⁰_{1,t}, and c⁰_{0,t}, may be obtained by fitting the foregoing compatibility conditions, and no special meaning is indicated herein.

(2) For the predicted traveling track on which the second vehicle changes lanes to the first adjacent lane or the second adjacent lane of the lane in which the second vehicle is located,
for example, the first adjacent lane is a left-side lane of the lane in which the second vehicle is located, and the second adjacent lane is a right-side lane of the lane in which the second vehicle is located, and it is assumed that the second vehicle changes lanes from the current location to the left-side lane or the right-side lane, the following equation (or may be referred to as a polynomial fitting model) may be obtained by performing quadratic polynomial fitting based on the location information of the second vehicle, the kinematic information, and road information of the to-be-transformed-to lane to represent the predicted traveling track of on which the second vehicle changes lanes to the first adjacent lane or the second adjacent lane of the lane in which the second vehicle is located: ${z}_{i , t} \left(x\right) = {{c}^{i}}_{4 , t} {x}^{4} + {{c}^{i}}_{3 , t} {x}^{3} + {{c}^{i}}_{2 , t} {x}^{2} + {{c}^{i}}_{1 , t} x + {{c}^{i}}_{0 , t} , i = 1 , 2 .$

In this equation, i = 1 represents that the second vehicle changes lanes to the left-side lane; i = 2 represents that the second vehicle changes lanes to the right-side lane.

The polynomial meets a following condition: $\left\{\begin{matrix}{z}_{i , t} \left({x}_{t}\right) = {y}_{t} & z {′}_{i , t} \left({x}_{t}\right) = tan \left({θ}_{t}\right) & z {"}_{i , t} \left({x}_{t}\right) = {γ}_{t} {\left(1+{tan}^{2}\left({θ}_{t}\right)\right)}^{\frac{3}{2}} \\ {z}_{i , t} \left({x}_{T}\right) = {y}_{i , t} \left({x}_{T}\right) , & z {′}_{i , t} \left({x}_{T}\right) = y {′}_{i , t} \left({x}_{T}\right) & z {"}_{i , t} \left({x}_{T}\right) = y {"}_{i , t} \left({x}_{T}\right)\end{matrix}\right.$

In the foregoing equation, five parameters, such as cⁱ_{4,t}, cⁱ_{3,t}, cⁱ_{2,t}, cⁱ_{1,t}, and cⁱ_{0,t}, may be obtained by fitting the foregoing compatibility conditions, and no special meaning is indicated herein.

Alternatively, in some embodiments, the foregoing polynomial fitting manner may not be used, but another fitting function such as a Bessel function may be used, or extraction may be performed based on a driving database, to obtain the predicted traveling track on which the second vehicle maintains traveling in the lane in which the second vehicle is currently located and the predicted traveling track on which the second vehicle changes lanes to the first adjacent lane or the second adjacent lane of the lane in which the second vehicle is located. This is not limited in this application.

After S904 is performed to obtain the at least two predicted traveling tracks, S905 and S906 may be first performed to determine a target predicted traveling track of the second vehicle based on the at least two obtained predicted traveling tracks, and then S907 is performed to determine the motion status of the second vehicle relative to the first vehicle based on the target predicted traveling track of the second vehicle and the first lane information.

S905: Determine a similarity between each predicted traveling track and a historical traveling track of the second vehicle.

In some embodiments, a first horizontal coordinate vector of the historical traveling track of the second vehicle in a first preset period may be obtained, where the first horizontal coordinate vector is used to indicate a distance vector between the historical traveling track and a lane line of the lane in which the second vehicle is located. Then, for each of the at least two predicted traveling tracks, a second horizontal coordinate vector of the predicted traveling track in a second preset period is obtained, where the second horizontal coordinate vector is used to indicate a distance vector between each predicted traveling track and the lane line of the lane in which the second vehicle is located, and the similarity between the predicted traveling track and the historical traveling track is determined based on the second horizontal coordinate vector and the first horizontal coordinate vector. In this way, the similarity between each predicted traveling track and the historical traveling track of the second vehicle is obtained.

The first horizontal coordinate vector of the historical traveling track of the second vehicle in the first preset period includes a plurality of first horizontal coordinates of the historical traveling track of the second vehicle in the first preset period. The second horizontal coordinate vector of each predicted traveling track in the second preset period includes a plurality of second horizontal coordinates of the predicted traveling track in the second preset period.

In some implementations, the first preset period may be a period including a plurality of consecutive first preset cycles, and each first preset cycle may include at least one first horizontal coordinate. The second preset period may be a period including a plurality of consecutive second preset cycles, and each second preset cycle may include at least one second horizontal coordinate.

For example, because maintaining traveling in the lane or changing lanes by a driver is a continuous process (it is assumed that the second vehicle is a vehicle driven by the driver), the driver performs corresponding adjustment before an obvious characteristic appears in a corresponding scenario. In view of this, in this application, a first horizontal coordinate time sequence (that is, the foregoing first horizontal coordinate vector) including the plurality of first horizontal coordinates of the historical traveling track of the second vehicle in the first preset period, and a second horizontal coordinate time sequence (that is, the foregoing second horizontal coordinate vector) including the plurality of second horizontal coordinates of each predicted traveling track in the second preset period may be first determined. Then, a similarity between the first horizontal coordinate time sequence and the second horizontal coordinate time sequence may be calculated, to obtain the similarity between the historical traveling track and the predicted traveling track of the second vehicle.

For example, a current moment is t, a first preset period is M + t - MΔT1 first preset cycles such as (t - MΔT, t - (M-1)ΔT, ..., t), and a second preset period is N+1 second preset cycles such as (M + N, M + N - 1, ..., M).

The first horizontal coordinate time sequence including the first horizontal coordinates of the historical traveling track in the first preset period may be represented as Y_{t,h}. ${Y}_{t , h} = \left({y}_{t - MΔT}, {y}_{t - \left(M-1\right) ΔT},…, {y}_{t}\right)$

In this equation, Y_{t,h} represents the first horizontal coordinate time sequence, y_{t-MΔT} represents a first horizontal coordinate at a moment t - MΔT, and the rest may be deduced by analogy.

In an example embodiment, M may be 20, N may be 10, and ΔTis a sampling period, and may be an integer multiple of 0.02s.

The second horizontal coordinate time sequence including the second horizontal coordinates of the predicted traveling track in the second preset period may be represented as Yⁱ_{t,p}. ${{Y}^{i}}_{t , p} = \left({{z}^{i}}_{N}\left(t-MΔT\right), {{z}^{i}}_{N}\left(t-\left(M-1\right)ΔT\right),…, {{z}^{i}}_{N}\left(t\right)\right) , i = 0 , 1 , 2 .$ ${{z}^{i}}_{N} \left(t-\left(M-j\right)ΔT\right) = {z}_{i , t - \left(M+N-j\right)} \left({x}_{t - \left(M-j\right) ΔT}\right) , j = 0 , 1 , 2 , … , M .$

In the two equations, i = 0 represents maintaining traveling in the lane; i = 1 represents changing lanes to the left-side lane; i = 2 represents changing lanes to the right-side lane; and Yⁱ_{t,p} represents the second horizontal coordinate time sequence. zⁱ_{N}(t - (M - j)ΔT) represents as a horizontal position of the second vehicle when the vertical location of the second vehicle that is predicted at a moment t - (M - j)ΔT is X_{t-(M-j)ΔT}.

Further, the similarity between the first horizontal coordinate time sequence Y_{t,h} and the second horizontal coordinate time sequence Yⁱ_{t,p} (i = 0,1,2) may be expressed as ${e}^{- {{ρ}^{i}}_{t}}$, and ρⁱₜ may be specifically expressed as follows: ${{ρ}^{i}}_{t} = {\sum }_{j = 0}^{M} {a}_{j} \left|{Y}_{t , h}\left(j\right)-{{Y}^{i}}_{t , p}\left(j\right)\right| , i = 0 , 1 , 2 .$

In this equation, i = 0 represents maintaining traveling in the lane; i = 1 represents changing lanes to the left-side lane; i = 2 represents changing lanes to the right-side lane; ${e}^{- {{ρ}^{i}}_{t}}$ may be understood as the similarity ${e}^{- {{ρ}^{i}}_{t}}$ between a corresponding predicted traveling track and the historical traveling track when i = 0,1,2; Y_{t,h}(j) represents a j^{th} component of Y_{t,h}; Yⁱ_{t,p}(j) represents a j^{th} component of Yⁱ_{t,p}; and aⱼ(j = 0,.. M) respectively represents weights of differences between the predicted traveling track and the historical traveling track in j previous periods from the current time, and meets the following condition: ${a}_{j} \geq 0 , {\sum }_{j = 0}^{M} {a}_{j} = 1 .$

It should be noted that a value of aⱼ may be obtained after normalization is performed on an initial value of aⱼ that is a reciprocal of a time difference between each j^{th} period corresponding to aⱼ and a current moment t. Details are not described herein again.

In some other embodiments, the similarity between each of the at least two predicted traveling tracks and the historical traveling track of the second vehicle may be determined by using another mathematical method, such as calculating a cosine similarity, a Mahalanobis distance, and a Euclidean distance. This is not limited herein.

S906: Determine the target predicted traveling track of the second vehicle based on the at least two predicted traveling tracks and the similarity between each predicted traveling track and the historical traveling track of the second vehicle.

Based on the similarity between each of the at least two predicted traveling tracks determined in S905 and the historical traveling track of the second vehicle, in a possible design, the determining the target predicted traveling track of the second vehicle based on the at least two predicted traveling tracks and the similarity between each predicted traveling track and the historical traveling track of the second vehicle may refer to: selecting, from the at least two predicted traveling tracks, a predicted traveling track that has a highest similarity to the historical traveling track of the second vehicle as the target predicted traveling track of the second vehicle. Because the similarity between the selected target predicted traveling track and the historical traveling track of the second vehicle is the highest, the target predicted traveling track is a predicted traveling track that is most likely to be close to a future actual traveling track of the second vehicle in the at least two predicted traveling tracks.

In another possible design, after the similarity between each of the at least two predicted traveling tracks and the historical traveling track of the second vehicle is obtained, a similarity between each predicted traveling track and the actual traveling track of the second vehicle may be first predicted based on the similarity between each predicted traveling track and the historical traveling track of the second vehicle. Then, the target predicted traveling track of the second vehicle is determined based on the at least two predicted traveling tracks and the similarity between each predicted traveling track and the actual traveling track of the second vehicle.

For example, the similarity between each predicted traveling track and the historical traveling track of the second vehicle may be normalized, and a probability of each predicted traveling track may be predicted. The probability may indicate a similarity between each predicted traveling track and the actual traveling track of the second vehicle. Then, comprehensive calculation may be performed with reference to the probability of each predicted traveling track and the foregoing at least two predicted traveling tracks, to obtain the target predicted traveling track of the second vehicle.

The following describes a process of determining the target predicted traveling track by using three predicted traveling tracks, such as the predicted traveling track on which the second vehicle maintains traveling in the lane in which the second vehicle is currently located, the predicted traveling track on which the second vehicle changes lanes to the left-side lane of the lane in which the second vehicle is located, and the predicted traveling track on which the second vehicle changes lanes to the right-side lane of the lane in which the second vehicle is located. However, it should be noted that actually, the target predicted traveling track may also be determined based on any two of the foregoing three predicted traveling tracks. Details are not described herein again.

The foregoing similarity ${e}^{- {{ρ}^{i}}_{t}}$ is used as an example. By normalizing ρⁱₜ corresponding to each predicted traveling track, a probability corresponding to each predicted traveling track may be preliminarily obtained. The probability may be expressed as P̃ⁱₜ. ${{{P}^{˜}}^{i}}_{t} = \frac{{{ρ}^{i}}_{t}}{{\sum }_{k = 0}^{2} {{ρ}^{k}}_{t}} \left(i=0,1,2\right) .$

In this equation, i = 0 represents maintaining traveling in the lane; i = 1 represents changing lanes to the left-side lane; and i = 2 represents changing lanes to the right-side lane.

Further, a probability corresponding to the predicted driving track on which the second vehicle maintains traveling in the lane in which the second vehicle is currently located may be expressed as P⁰ₜ. ${{P}^{0}}_{t} = \frac{{{{P}^{˜}}^{0}}_{t}}{{\sum }_{k = 0}^{2} {{{P}^{˜}}^{k}}_{t}} .$

A probability corresponding to the predicted traveling track on which the second vehicle changes lanes to the left-side lane of the lane in which the second vehicle is located may be expressed as P¹ₜ. ${{P}^{1}}_{t} = \frac{{{{P}^{˜}}^{1}}_{t}}{{\sum }_{k = 0}^{2} {{{P}^{˜}}^{k}}_{t}} .$

A probability corresponding to the predicted traveling track on which the second vehicle changes lanes to the right-side lane of the lane in which the second vehicle is located may be expressed as P²ₜ. ${{P}^{2}}_{t} = \frac{{{{P}^{˜}}^{2}}_{t}}{{\sum }_{k = 0}^{2} {{{P}^{˜}}^{k}}_{t}} .$

After the foregoing probabilities P⁰ₜ, P¹ₜ, and P²ₜ corresponding to the predicted traveling tracks are obtained, the target predicted traveling track may be comprehensively calculated with reference to the three predicted traveling tracks.

As described in the foregoing embodiment, it is assumed that zi,t(x) represents the predicted traveling track. i = 0 represents maintaining traveling in the lane, i = 1 represents changing lanes to the left-side lane, and i = 2 represents changing lanes to the right-side lane, so the target predicted traveling track may be represented as zt(x). ${z}_{t} \left(x\right) = {\sum }_{i = 0}^{i = 2} {{P}^{i}}_{t} {z}_{i , t} \left(x\right) .$

Optionally, because lane change performed by the second vehicle to the left-side lane or lane change performed by the second vehicle to the right-side lane does not occur at the same time, in some embodiments of this application, when the target predicted traveling track is determined based on the foregoing three predicted traveling tracks, a minimum value of the probabilities respectively corresponding to the three predicted traveling tracks may be corrected to 0, to further make the determined target predicted traveling track closer to the actual traveling track, and improve accuracy of subsequent vehicle motion status identification. For example, if the probability corresponding to the predicted traveling track on which the second vehicle changes lanes to the left-side lane is the smallest, the probability may be corrected to 0. The target predicted traveling track is determined only based on the predicted traveling track on which the second vehicle changes lanes to the right-side lane, and the predicted traveling track on which the second vehicle maintains traveling in the lane, and probabilities corresponding to the two predicted traveling tracks respectively.

In another possible design, after the similarity between each predicted traveling track and the actual traveling track of the second vehicle is predicted based on the similarity between each predicted traveling track and the historical traveling track of the second vehicle, a predicted traveling track that has a highest similarity to the actual traveling track of the second vehicle may be directly selected as the target predicted traveling track of the second vehicle.

For example, after the probability of each predicted traveling track of the second vehicle is separately determined based on the similarity between each of the at least two predicted traveling tracks and the historical traveling track of the second vehicle, a predicted traveling track with a maximum probability may be directly selected as the target predicted traveling track of the second vehicle.

This design is similar to the foregoing first manner of directly selecting a predicted traveling track with a highest similarity as the target predicted traveling track of the second vehicle, and the determined predicted traveling track is a predicted traveling track that is most likely to be close to a future actual traveling track of the second vehicle in the foregoing at least two predicted traveling tracks.

It should be noted that a specific manner of determining the target predicted traveling track of the second vehicle based on the at least two predicted traveling tracks and the similarity between each of the at least two predicted traveling tracks and the historical traveling track of the second vehicle is not limited in this application.

S907: Determine the motion status of the second vehicle relative to the first vehicle based on the target predicted traveling track and the first lane information.

As described above, the first lane information is the track information of the lane central axis of the lane in which the first vehicle is located. After the target predicted traveling track is obtained, the motion status of the second vehicle relative to the first vehicle may be determined by determining a distance (for example, a minimum horizontal distance or a maximum horizontal distance) between the target predicted traveling track and the lane central axis of the lane in which the first vehicle is located with reference to the first lane information, for example: whether the second vehicle cuts from another lane to the lane in which the first vehicle is located, whether the second vehicle cuts from the lane in which the first vehicle is located to another lane, or the like.

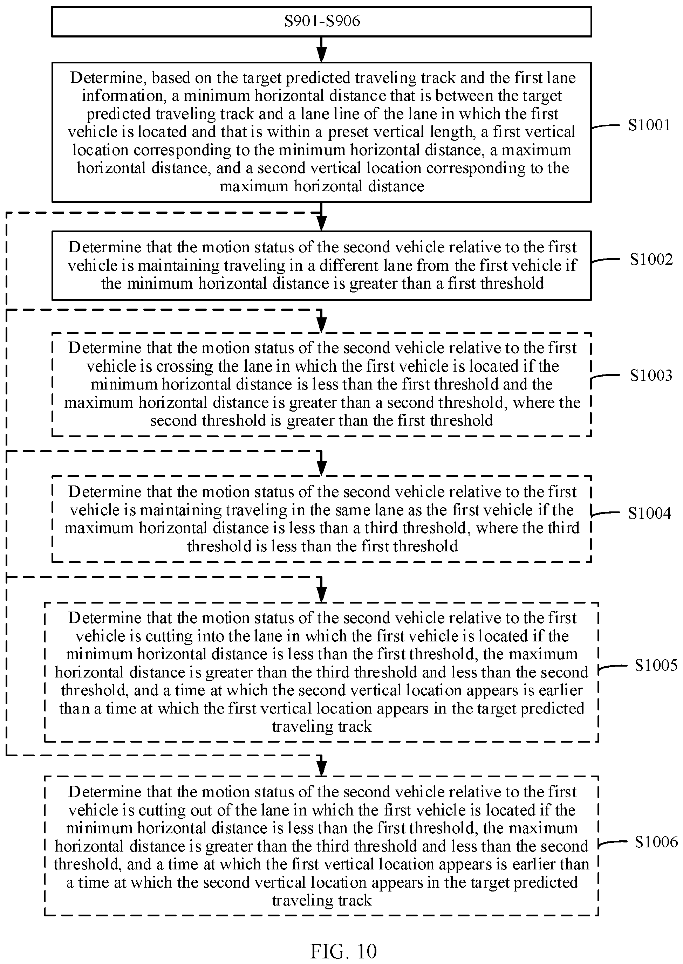

For example, FIG. 10 is another schematic flowchart of a vehicle motion status identification method according to an embodiment of this application.

As shown in FIG. 10, S907 may include S1001 to S1006.

S1001: Determine, based on the target predicted traveling track and the first lane information, a minimum horizontal distance that is between the target predicted traveling track and a lane line of the lane in which the first vehicle is located and that is within a preset vertical length, a first vertical location corresponding to the minimum horizontal distance, a maximum horizontal distance, and a second vertical location corresponding to the maximum horizontal distance.

As described above, the first lane information may be the lane central axis of the lane in which the first vehicle is located.

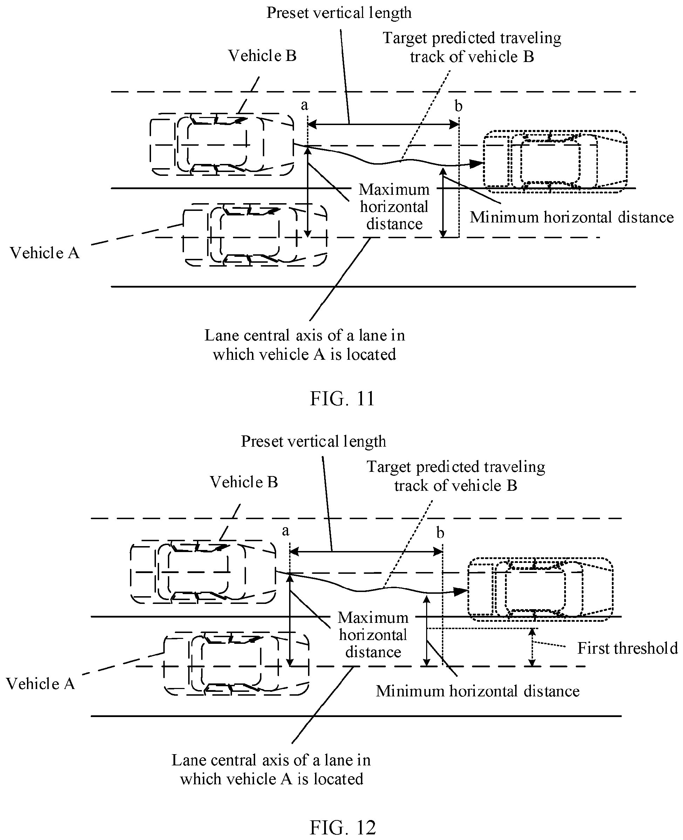

For example, the first vehicle is a vehicle A and the second vehicle is a vehicle B. FIG. 11 is a schematic diagram in which the vehicle A identifies a motion status of the vehicle B based on a target predicted traveling track of the vehicle B according to an embodiment of this application.

As shown in FIG. 11, assuming that the preset vertical length is [a, b], a location of a may be a location close to the vehicle B in a direction along a lane central axis, or a location that is the same as a vertical coordinate of the vehicle B. Correspondingly, a location of b is a location away from the vehicle B in the direction along the lane central axis. It may be understood that the preset vertical length [a, b] is only used to limit a specific range in the direction along the lane central axis.

The minimum horizontal distance dₘᵢₙ between the target predicted traveling track zt(x) and the lane central axis y_{ego,t} of the lane in which the vehicle A is located within the preset vertical length [a, b] may be expressed as: ${d}_{min} = {min}_{x ∈ \left[a, b\right]} \left|{y}_{ego , t}\left(x\right)-{z}_{t}\left(x\right)\right| .$

The maximum horizontal distance dₘₐₓ between the target predicted traveling track zₜ(x) and the lane central axis y_{ego,t} of the lane in which the vehicle A is located within the preset vertical length [a, b] may be expressed as: ${d}_{max} = {max}_{x ∈ \left[a, b\right]} \left|{y}_{ego , t}\left(x\right)-{z}_{t}\left(x\right)\right| .$

The first vertical location corresponding to the minimum horizontal distance is a location of dₘᵢₙ in the target predicted traveling track. The second vertical location is a location of dₘₐₓ in the target predicted traveling track.

S 1002: Determine that the motion status of the second vehicle relative to the first vehicle is maintaining traveling in a different lane from the first vehicle if the minimum horizontal distance is greater than a first threshold.

Optionally, a value of the first threshold d₁ may be a half of a width of a body of the first vehicle plus 30 centimeters, or may be a value close to a half of the width of the body of the first vehicle plus 30 centimeters.

When the minimum horizontal distance dₘᵢₙ is greater than the first threshold d₁, it may be determined that the second vehicle does not enter the lane in which the first vehicle is located, and it may be considered that the motion status of the second vehicle relative to the first vehicle is that the second vehicle maintains traveling in a different lane from the first vehicle, which may, for example, be expressed as: $objectState \left(objectState\right) = passby \left(passby\right)$

For example, FIG. 12 is another schematic diagram in which the vehicle A identifies a motion status of the vehicle B based on a target predicted traveling track of the vehicle B according to an embodiment of this application. As shown in FIG. 12, if the minimum horizontal distance dₘᵢₙ between the target predicted traveling track of the vehicle B and the lane central axis of the lane in which the vehicle A is located is greater than the first threshold d₁, it is determined that the motion status of the vehicle B relative to the vehicle A is objectState = passby.

S1003: Determine that the motion status of the second vehicle relative to the first vehicle is crossing the lane in which the first vehicle is located if the minimum horizontal distance is less than the first threshold and the maximum horizontal distance is greater than a second threshold, where the second threshold is greater than the first threshold.

Optionally, a value of the second threshold d₂ may be a width of the lane in which the first vehicle is located plus 30 centimeters, or may be a value close to the width of the lane in which the first vehicle is located plus 30 centimeters. It may be learned that the second threshold d₂ is much greater than the first threshold d₁.

When the minimum horizontal distance dₘᵢₙ is less than the first threshold d₁, and the maximum horizontal distance dₘₐₓ is greater than the second threshold d₂, it may be determined that the second vehicle may enter the lane in which the first vehicle is located, and have a large horizontal offset, so it may be considered that the motion status of the second vehicle relative to the first vehicle is crossing the lane in which the first vehicle is located, which may, for example, be expressed as: $objectState = cross \left(cross\right)$

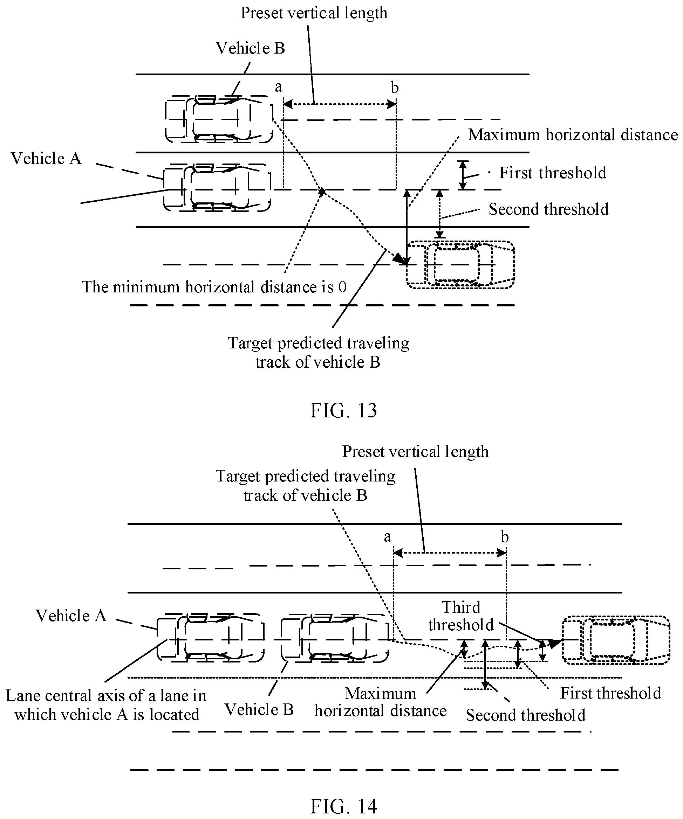

For example, FIG. 13 is still another schematic diagram in which the vehicle A identifies a motion status of the vehicle B based on a target predicted traveling track of the vehicle B according to an embodiment of this application. As shown in FIG. 13, if the minimum horizontal distance dₘᵢₙ between the target predicted traveling track of the vehicle B and the lane central axis of the lane in which the vehicle A is located is less than the first threshold d₁, and the maximum horizontal distance dₘₐₓ is greater than the second threshold d₂, it may be determined that the vehicle B may enter the lane in which the vehicle A is located, and have a large horizontal offset, so it may be considered that the motion status of the vehicle B relative to the vehicle A is crossing the lane in which the vehicle A is located, which may, for example, be expressed as objectState = cross.

S1004: Determine that the motion status of the second vehicle relative to the first vehicle is maintaining traveling in the same lane as the first vehicle if the maximum horizontal distance is less than a third threshold, where the third threshold is less than the first threshold.

Optionally, a value of the third threshold d₃ may be a half of the width of the body of the first vehicle minus 30 centimeters, or may be a value close to a half of the width of the body of the first vehicle minus 30 centimeters. It may be learned that the third threshold d₃ is less than the first threshold d₁.

When the maximum horizontal distance dₘₐₓ is less than the third threshold d₃, it may be determined that the motion status of the second vehicle relative to the first vehicle is maintaining traveling in the same lane as the first vehicle, which may, for example, be expressed as: $objectState = follow \left(follow\right)$

Certainly, it may be understood that in S1004, the second vehicle may follow the first vehicle, or the first vehicle may follow the second vehicle.

For example, FIG. 14 is still another schematic diagram in which the vehicle A identifies a motion status of the vehicle B based on a target predicted traveling track of the vehicle B according to an embodiment of this application. As shown in FIG. 14, if the maximum horizontal distance dₘₐₓ between the target predicted traveling track of the vehicle B and the lane central axis of the lane in which the vehicle A is located is less than the third threshold d₃, it is determined that the motion status of the vehicle B relative to the vehicle A is maintaining traveling in the same lane as the vehicle A, which may, for example, be expressed as objectState = follow. In this case, the minimum horizontal distance dₘᵢₙ is definitely less than the third threshold d₃, and details are not described again.

S1005: Determine that the motion status of the second vehicle relative to the first vehicle is cutting into the lane in which the first vehicle is located if the minimum horizontal distance is less than the first threshold, the maximum horizontal distance is greater than the third threshold and less than the second threshold, and a time at which the second vertical location appears is earlier than a time at which the first vertical location appears in the target predicted traveling track.

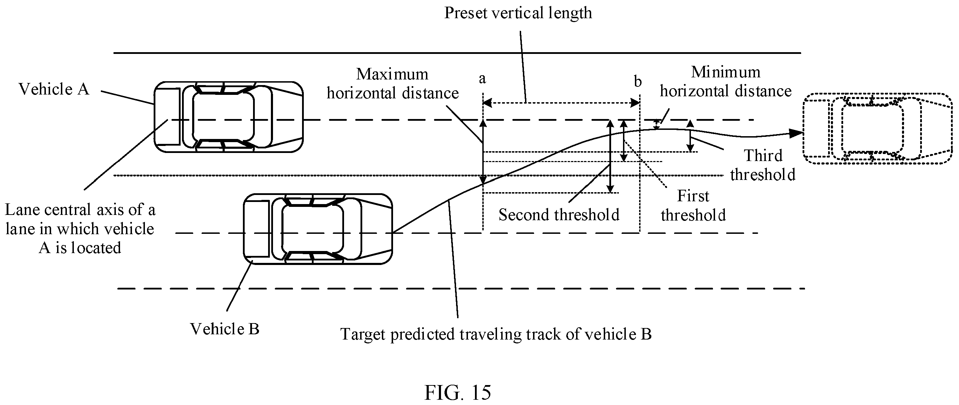

For example, FIG. 15 is still another schematic diagram in which the vehicle A identifies a motion status of the vehicle B based on a target predicted traveling track of the vehicle B according to an embodiment of this application. As shown in FIG. 15, if the minimum horizontal distance dₘᵢₙ between the target predicted traveling track of the vehicle B and the lane central axis of the lane in which the vehicle A is located is less than the first threshold d₁, the maximum horizontal distance dₘₐₓ is greater than the third threshold d₃ and less than the second threshold d₂, and the time at which the second vertical location xₘₐₓ appears in the target predicted traveling track is earlier than the time at which the first vertical location xₘᵢₙ appears, it may be determined that the motion status of the vehicle B relative to the vehicle A is cutting into the lane in which the vehicle A is located, which may, for example, be expressed as objectState = cut in (cut in).

S1006: Determine, if the minimum horizontal distance is less than the first threshold, the maximum horizontal distance is greater than the third threshold and less than the second threshold, and a time at which the first vertical location appears is earlier than a time at which the second vertical location appears in the target predicted traveling track, that the motion status of the second vehicle relative to the first vehicle is cutting out of the lane in which the first vehicle is located.

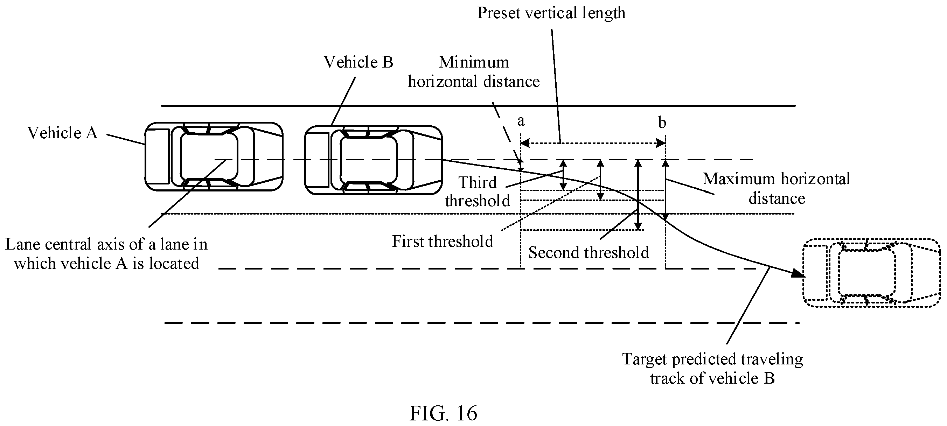

For example, FIG. 16 is still another schematic diagram in which the vehicle A identifies a motion status of the vehicle B based on a target predicted traveling track of the vehicle B according to an embodiment of this application. As shown in FIG. 16, if the minimum horizontal distance dₘᵢₙ between the target predicted traveling track of the vehicle B and the lane central axis of the lane in which the vehicle A is located is less than the first threshold d₁, the maximum horizontal distance dₘₐₓ is greater than the third threshold d₃ and less than the second threshold d₂, and the time at which the first vertical location xₘᵢₙ appears in the target predicted traveling track is earlier than the time at which the second vertical location xₘₐₓ appears, it may be determined that the motion status of the vehicle B relative to the vehicle A is cutting out of the lane in which the vehicle A is located, which may, for example, be expressed as objectState = cut out (cut out).

It should be noted that in the foregoing example descriptions of S1002 to S1006, although the motion status of the second vehicle relative to the first vehicle is divided by using scenarios in which a minimum horizontal distance is greater than or less than a threshold, during actual implementation, a scenario in which a minimum distance is equal to a threshold may further need to be considered. For example, in some implementations, a scenario in which the minimum horizontal distance dₘᵢₙ is equal to the first threshold d₁ and a scenario in which the minimum horizontal distance dₘᵢₙ is greater than the first threshold d₁ may be grouped together. Alternatively, in some other implementations, a scenario in which the minimum horizontal distance dₘᵢₙ is equal to the first threshold d₁ and a scenario in which the minimum horizontal distance dₘᵢₙ is less than the first threshold d₁ may be grouped together. This is not limited in this application. Comparisons with other thresholds are similar, and details are not described again.

In a possible design, when it is determined in S1005 that the motion status of the second vehicle relative to the first vehicle is cutting into the lane in which the first vehicle is located, the method may further refine the motion status of the second vehicle relative to the first vehicle into cutting into the lane in which the first vehicle is located in a first cutting-in status or cutting into the lane in which the first vehicle is located in a second cutting-in status based on a vertical distance between the first vertical location corresponding to the minimum horizontal distance and an end that is of preset vertical length and that is close to the first vehicle.

Alternatively, when it is determined in S1006 that the motion status of the second vehicle relative to the first vehicle is cutting out of the lane in which the first vehicle is located, the method may further refine the motion status of the second vehicle relative to the first vehicle into cutting out of the lane in which the first vehicle is located in a first cutting-out status or cutting out of the lane in which the first vehicle is located in a second cutting-out status based on a vertical distance between the first vertical location corresponding to the minimum horizontal distance and an end that is of preset vertical length and that is close to the first vehicle.

For example, the first cutting-in status may be referred to as a close cutting-in status, and the first cutting-out status may be referred to as a close cutting-out status. The second cutting-in status may be referred to as a general cutting-in status, and the second cutting-out status may be referred to as a general cutting-out status. Alternatively, the first/second cutting-in status and the first/second cutting-out status may be referred to as other names.

Hereinafter, for example, the first cutting-in status is referred to as a close cutting-in status, the first cutting-out status is referred to as a close cutting-out status, the second cutting-in status is referred to as a general cutting-in status, and the second cutting-out status is referred to as a cutting-out status. A case in which the motion status of the second vehicle relative to the first vehicle is further refined into a close cutting-in or a general cutting-in, and a case in which the motion status of the second vehicle relative to the first vehicle is further refined into a close cutting-out or a general cutting-out are separately described by using an example.

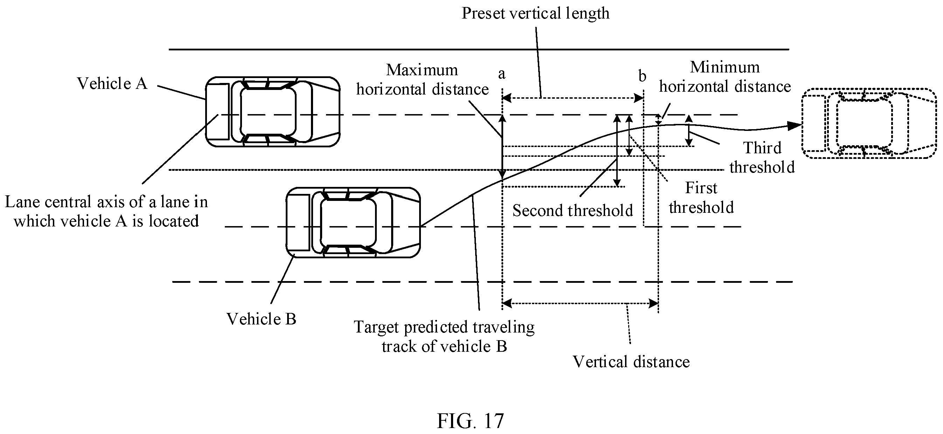

FIG. 17 is still another schematic diagram in which the vehicle A identifies a motion status of the vehicle B based on a target predicted traveling track of the vehicle B according to an embodiment of this application.

For example, as shown in FIG. 17, the motion status of the second vehicle relative to the first vehicle may be further refined based on a vertical distance between the first vertical location corresponding to the minimum horizontal distance and an end a of the preset vertical length, that is, a distance between the first vertical location and the end a of the preset vertical length in a direction parallel to the lane line of the lane in which the first vehicle is located. When it is determined that the motion status of the second vehicle relative to the first vehicle is cutting into the lane in which the first vehicle is located, if the vertical distance is less than a fourth threshold (that is, 1 m, 2 m, 3 m, or the like, which is not limited herein), it is determined that the motion status of the second vehicle relative to the first vehicle is closely cutting into (close_cut_in) the lane in which the first vehicle is located. If the vertical distance is greater than the fourth threshold, it is determined that the motion status of the second vehicle relative to the first vehicle is generally cutting into (general_cut_in) the lane in which the first vehicle is located.

It is easy to understand that, if the vertical distance is equal to the fourth threshold, it may be determined that the motion status of the second vehicle relative to the first vehicle is closely cutting into the lane in which the first vehicle is located or generally cutting into the lane in which the first vehicle is located. This is not limited herein.

Similarly, by using an example, the motion status of the second vehicle relative to the first vehicle may be further refined into closely cutting out or generally cutting out based on a vertical distance between the first vertical location corresponding to the minimum horizontal distance and an end a of the preset vertical length, that is, a distance between the first vertical location and the end a of the preset vertical length in a direction parallel to the lane line of the lane in which the first vehicle is located. For example, when it is determined that the motion status of the second vehicle relative to the first vehicle is cutting out of the lane in which the first vehicle is located, if the vertical distance is less than the fourth threshold, it is determined that the motion status of the second vehicle relative to the first vehicle is closely cutting out of the lane in which the first vehicle is located. If the vertical distance is greater than the fourth threshold, it is determined that the motion status of the second vehicle relative to the first vehicle is generally cutting out of the lane in which the first vehicle is located. Similarly, it is easy to understand that, if the vertical distance is equal to the fourth threshold, it may be determined that the motion status of the second vehicle relative to the first vehicle is closely cutting out of the lane in which the first vehicle is located or generally cutting out of the lane in which the first vehicle is located. This is not limited herein.

In some embodiments, before the predicted traveling track of the second vehicle is determined based on the second lane information and the location information and the motion information of the second vehicle in S904, the vehicle motion status identification method may further include a step of modifying the motion information of the second vehicle.

For example, horizontal speeds in several (for example, six) historical periods may be first collected, and an average value of the horizontal speeds in the foregoing several historical periods is calculated to obtain an average historical horizontal speed of the second vehicle. Then, the horizontal speed included in the motion information of the second vehicle is modified based on the average horizontal lateral speed of the second vehicle.

Alternatively, time-speed polynomial fitting may be performed on horizontal speeds in the foregoing several historical periods to obtain a fitting coefficient (For a manner of polynomial fitting, refer to the manner of performing polynomial fitting on the predicted traveling track on which the second vehicle maintains traveling in the lane or changes lanes in the foregoing embodiments. Details are not described herein again). Then, a current horizontal speed of the second vehicle is predicted based on the fitting coefficient, to obtain a predicted current horizontal speed. Then, the horizontal speed included in the motion information of the second vehicle may be modified based on the predicted current horizontal speed.

For example, the horizontal speed included in the motion information of the second vehicle is modified based on the predicted current horizontal speed (same as the manner of modifying based on the average historical horizontal speed of the second vehicle). The collected horizontal speed of the second vehicle may be compared with the foregoing predicted current horizontal speed, and if a difference between the collected horizontal speed and predicted current horizontal speed is greater than a fifth threshold, the collected horizontal speed is modified, to reduce disturbance caused by an excessively large instantaneous speed of the collected horizontal speed. For example, the horizontal speed may be increased or decreased, or a weighted combination is performed on the collected horizontal speed and the predicted current horizontal speed based on a preset weight to update the collected horizontal speed.

Optionally, a value of the fifth threshold is related to driving stability of the second vehicle. A higher driving stability of the second vehicle indicates a smaller fifth threshold, and a lower driving stability of the second vehicle indicates a larger fifth threshold. For example, the fifth threshold may be 0.2 meters per second (m/s), 0.4 m/s, or the like. This is not limited herein.

In still some embodiments, when the similarity between each of the at least two predicted traveling tracks and the historical traveling track of the second vehicle is determined in S905, if a manner in which the first horizontal coordinate time sequence including first historical coordinates of the historical traveling track of the second vehicle in the first preset period and the second historical coordinate time sequence including second transverse coordinates of each predicted traveling track in the second preset time period are first determined, and the similarity between the first historical coordinate time sequence and the second historical coordinate time sequence is then calculated to obtain the similarity between the historical traveling track and the predicted traveling track of the second vehicle is used, duration of the first preset period and the second preset period may be further adjusted based on a difference between the collected horizontal speed of the second vehicle and the foregoing predicted current horizontal speed in this manner.

For example, when the difference is large, it indicates that a driving intention of the second vehicle is specific. A delay effect of the historical traveling track of the second vehicle on the predicted traveling track may be reduced by decreasing the duration of the first preset period and the second preset period. Otherwise, when the difference is small, the duration of the first preset period and the second preset period may be increased.

It is assumed that for the second vehicle, a polynomial fitting prediction result of the historical horizontal speed, that is, the foregoing predicted current horizontal speed is v, the collected current horizontal speed is v0, the first preset period is δₘ, and the second preset period is δₙ (δₘ and δₙ are calibrated values, for example, δₘ may be 3 and δₙ may be 2.5), the duration of δₘ and δₙ may be changed as follows: ${Δ}_{m} = \left[v-v0\right] * {δ}_{m} ; {Δ}_{n} = \left[v-v0\right] * {δ}_{n} .$

Optionally, the foregoing δₘ may refer to a quantity of first preset cycles included in the first preset period, and adjusting the duration of the first preset period refers to adjusting the quantity of first preset cycles included in the first preset period.

Similarly, the foregoing δₙ may refer to a quantity of second preset cycles included in the second preset period, and adjusting the duration of the second preset period refers to adjusting the quantity of second preset cycles included in the second preset period.

The foregoing mainly describes the solutions provided in embodiments of this application from a perspective of a vehicle or a server. It may be understood that, to implement the foregoing functions, the vehicle or the server may include a corresponding hardware structure and/or software module for performing each of the functions.

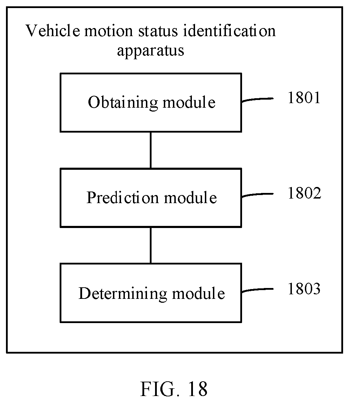

For example, an embodiment of this application may further provide a vehicle motion status identification apparatus. FIG. 18 is a schematic diagram of a structure of a vehicle motion status identification apparatus according to an embodiment of this application. As shown in FIG. 18, the vehicle motion status identification apparatus may include: an obtaining module 1801, configured to obtain first lane information, second lane information, and location information and motion information of a second vehicle, where the first lane information is lane information of a lane in which a first vehicle is located, and the second lane information includes at least two types of the following: lane information of a lane in which the second vehicle is located, lane information of a first adjacent lane of the lane in which the second vehicle is located, and lane information of a second adjacent lane of the lane in which the second vehicle is located; a prediction module 1802, configured to determine at least two predicted traveling tracks of the second vehicle based on the second lane information, and the location information and the motion information of the second vehicle, where each predicted traveling track is corresponding to each type of the lane information included in the second lane information; and a determining module 1803, configured to determine a motion status of the second vehicle relative to the first vehicle based on the at least two predicted traveling tracks and the first lane information.

In a possible design, the determining module 1803 is specifically configured to: determine a target predicted traveling track of the second vehicle based on the at least two predicted traveling tracks and a similarity between at least each predicted traveling track and a historical traveling track of the second vehicle; and determine the motion status of the second vehicle relative to the first vehicle based on the target predicted traveling track and the first lane information.

In a possible design, the determining module 1803 is further configured to: obtain a first horizontal coordinate vector of the historical traveling track of the second vehicle in a first preset period, where the first horizontal coordinate vector is used to indicate a distance vector between the historical traveling track and a lane line of the lane in which the second vehicle is located; and obtain a second horizontal coordinate vector of each predicted traveling track in a second preset period, and determine the similarity between each predicted traveling track and the historical traveling track based on the second horizontal coordinate vector and the first horizontal coordinate vector, where the second horizontal coordinate vector is used to indicate a distance vector between each predicted traveling track and the lane line of the lane in which the second vehicle is located.

In a possible design, the determining module 1803 is specifically configured to: predict a similarity between each predicted traveling track and an actual traveling track of the second vehicle based on the similarity between each predicted traveling track and the historical traveling track of the second vehicle; and determine the target predicted traveling track of the second vehicle based on the at least two predicted traveling tracks and the similarity between each predicted traveling track and the actual traveling track of the second vehicle.

In a possible design, the determining module 1803 is specifically configured to determine a minimum horizontal distance that is between the target predicted traveling track and a lane line of the lane in which the first vehicle is located and that is within a preset vertical length based on the target predicted traveling track and the first lane information; and determine that the motion status of the second vehicle relative to the first vehicle is maintaining traveling in a different lane from the first vehicle if the minimum horizontal distance is greater than a first threshold.

In a possible design, the determining module 1803 is further configured to: determine a maximum horizontal distance between the target predicted traveling track and the lane line of the lane in which the first vehicle is located within the preset vertical length based on the target predicted traveling track and the first lane information; and determine that the motion status of the second vehicle relative to the first vehicle is crossing the lane in which the first vehicle is located if the minimum horizontal distance is less than the first threshold and the maximum horizontal distance is greater than a second threshold, where the second threshold is greater than the first threshold; or determine that the motion status of the second vehicle relative to the first vehicle is maintaining traveling in the same lane as the first vehicle if the maximum horizontal distance is less than a third threshold, where the third threshold is less than the first threshold; or determine that the motion status of the second vehicle relative to the first vehicle is cutting into the lane in which the first vehicle is located or cutting out of the lane in which the first vehicle is located if the minimum horizontal distance is less than the first threshold, and the maximum horizontal distance is greater than the third threshold and less than the second threshold.

In a possible design, the determining module 1803 is further configured to: obtain a first vertical location corresponding to the minimum horizontal distance and a second vertical location corresponding to the maximum horizontal distance; and determine that the motion status of the second vehicle relative to the first vehicle is cutting into the lane in which the first vehicle is located if the minimum horizontal distance is less than the first threshold, the maximum horizontal distance is greater than the third threshold and less than the second threshold, and a time at which the second vertical location appears is earlier than a time at which the first vertical location appears in the target predicted traveling track; or determine that the motion status of the second vehicle relative to the first vehicle is cutting out of the lane in which the first vehicle is located if a time at which the first vertical location appears is earlier than a time at which the second vertical location appears in the target predicted traveling track.

In a possible design, the determining module 1803 is further configured to: obtain a vertical distance between the first vertical location and a first end of the preset vertical length, where the vertical distance is a distance between the first vertical location and the first end of the preset vertical length in a direction parallel to the lane line of the lane in which the first vehicle is located, and the first end of the preset vertical length is an end close to the first vehicle; and determine that the motion status of the second vehicle relative to the first vehicle is cutting into the lane in which the first vehicle is located in a first cutting-in status or cutting out of the lane in which the first vehicle is located in a first cutting-out status if the vertical distance is less than a fourth threshold; or determine that the motion status of the second vehicle relative to the first vehicle is cutting into the lane in which the first vehicle is located in a second cutting-in status or cutting out of the lane in which the first vehicle is located in a second cutting-out status if the vertical distance is greater than the fourth threshold.

In a possible design, the motion information of the second vehicle includes a horizontal speed of the second vehicle; and the prediction module 1802 is further configured to modify the horizontal speed included in the motion information of the second vehicle based on an average historical horizontal speed of the second vehicle.

It should be understood that division into the modules or units in the apparatus is merely logical function division. During actual implementation, all or some of the modules or units may be integrated into one physical entity or may be physically separated. In addition, all the modules in the apparatus may be implemented in a form of software invoked by a processing element, or may be implemented in a form of hardware; or some units may be implemented in a form of software invoked by a processing element, and some units may be implemented in a form of hardware.

For example, each unit may be an independently disposed processing element, or may be integrated into a chip of the apparatus for implementation. Alternatively, each unit may be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits.

For another example, when the units in the apparatus may be implemented in a form of scheduling a program by the processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

For example, an embodiment of this application further provides a vehicle motion status identification apparatus. The apparatus includes: an interface circuit, configured to receive data transmitted by another apparatus; and a processor, connected to the interface circuit, and configured to perform the steps in the foregoing methods. The processor may include one or more processors.

In an implementation, modules that separately implement corresponding steps in the foregoing methods may be implemented in a form of scheduling a program by a processing element. For example, the vehicle motion status identification apparatus may include a processing element and a storage element, and the processing element invokes a program stored in the storage element, to perform the method described in the foregoing method embodiments. The storage element may be a storage element located on a same chip as the processing element, namely, an on-chip storage element.

In another implementation, a program for implementing the foregoing methods may be in a storage element on a different chip from the processing element, namely, an off-chip storage element. In this case, the processing element invokes or loads the program from the off-chip storage element to the on-chip storage element, to invoke and perform the method described in the foregoing method embodiments.

For example, an embodiment of this application may further provide a vehicle including a processor. The processor is configured to connect to a memory, and invoke a program stored in the memory, to perform the method described in the foregoing method embodiments.

Alternatively, an embodiment of this application may further provide a server including a processor. The server may perform remote communication with a vehicle. The processor is configured to connect to a memory, and invoke a program stored in the memory, to perform the method described in the foregoing method embodiments.

Alternatively, an embodiment of this application may further provide a vehicle driving system, for example, may be an autonomous driving system or an assisted driving system. The vehicle driving system may include a vehicle and a server, or may be independently deployed in a vehicle or a server. The vehicle driving system includes a processor, and the processor is configured to connect to a memory, and invoke a program stored in the memory, to perform the method described in the foregoing method embodiments.

In still another implementation, modules configured to implement the steps in the foregoing methods may be configured as one or more processing elements. These processing elements may be disposed on a terminal. The processing element herein may be an integrated circuit, for example, one or more ASICs, one or more DSPs, one or more FPGAs, or a combination of these types of integrated circuits. These integrated circuits may be integrated together to form a chip.

In still another implementation, modules configured to implement the steps in the foregoing methods may be integrated together and implemented in a form of an SOC. The SOC chip is configured to implement a corresponding method. At least one processing element and a storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of some units may be implemented in a form of a program invoked by the processing element, and functions of some units are implemented in a form of an integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected according to actual requirements to achieve the objectives of the solutions of the embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product, for example, a program. The software product is stored in a program product, for example, a computer-readable storage medium, and includes several instructions for enabling a device (which may be a single-chip microcomputer, a chip, or the like) or a processor (processor) to perform all or some of the steps of the methods described in the embodiments of this application. The foregoing storage medium includes any medium that can store program code, such as a USB flash drive, a removable hard disk, a ROM, a RAM, a magnetic disk, or an optical disc.

For example, an embodiment of this application provides a computer-readable storage medium, including computer software instructions. When the computer software instructions are run in a vehicle motion status identification apparatus or a chip built in the vehicle motion status identification apparatus, the vehicle motion status identification apparatus is enabled to perform the method described in the foregoing method embodiments.

The foregoing descriptions are merely specific implementations of this application, but are not intended to limit the protection scope of this invention, which is defined by the appended claims.

## Claims

1. A vehicle motion status identification method, whose steps are implemented by using a hardware integrated logic circuit in a processor element or implemented in the form of software invoked by a processing element and wherein the method comprises:
obtaining (S901-S903) first lane information, second lane information, and location information and motion information of a second vehicle, wherein the first lane information is lane information of a lane in which a first vehicle is located, and the second lane information comprises at least two types of the following: lane information of a lane in which the second vehicle is located, lane information of a first adjacent lane of the lane in which the second vehicle is located, and lane information of a second adjacent lane of the lane in which the second vehicle is located;
determining (S904) at least two predicted traveling tracks of the second vehicle based on the second lane information and the location information and the motion information of the second vehicle, wherein each predicted traveling track is corresponding to each type of the lane information comprised in the second lane information; and
determining a motion status of the second vehicle relative to the first vehicle based on the at least two predicted traveling tracks and the first lane information,
wherein the determining a motion status of the second vehicle relative to the first vehicle based on the at least two predicted traveling tracks and the first lane information comprises:
determining (S906) a target predicted traveling track of the second vehicle based on the at least two predicted traveling tracks and a similarity between each predicted traveling track and a historical traveling track of the second vehicle; and
determining (S907) the motion status of the second vehicle relative to the first vehicle based on the target predicted traveling track and the first lane information;**characterized in that** before the determining (S906) a target predicted traveling track of the second vehicle based on the at least two predicted traveling tracks and a similarity between each predicted traveling track and a historical traveling track of the second vehicle, the method further comprises:
obtaining a first horizontal coordinate vector of the historical traveling track of the second vehicle in a first preset period, wherein the first horizontal coordinate vector is used to indicate a distance vector between the historical traveling track and a lane line of the lane in which the second vehicle is located; and
obtaining a second horizontal coordinate vector of each predicted traveling track in a second preset period, and determining the similarity between each predicted traveling track and the historical traveling track based on the second horizontal coordinate vector and the first horizontal coordinate vector, wherein the second horizontal coordinate vector is used to indicate a distance vector between each predicted traveling track and the lane line of the lane in which the second vehicle is located.

2. The method according to claim 1, wherein the determining (S907) a target predicted traveling track of the second vehicle based on the at least two predicted traveling tracks and a similarity between each predicted traveling track and a historical traveling track of the second vehicle comprises:
predicting a similarity between each predicted traveling track and an actual traveling track of the second vehicle based on the similarity between each predicted traveling track and the historical traveling track of the second vehicle; and
determining the target predicted traveling track of the second vehicle based on the at least two predicted traveling tracks and the similarity between each predicted traveling track and the actual traveling track of the second vehicle.

3. The method according to any one of claims 1 to 2, wherein the determining the motion status of the second vehicle relative to the first vehicle based on the target predicted traveling track and the first lane information comprises:
determining a minimum horizontal distance that is between the target predicted traveling track and a lane line of the lane in which the first vehicle is located and that is within a preset vertical length based on the target predicted traveling track and the first lane information; and
determining that the motion status of the second vehicle relative to the first vehicle is maintaining traveling in a different lane from the first vehicle if the minimum horizontal distance is greater than a first threshold.

4. The method according to claim 3, wherein the method further comprises:
determining a maximum horizontal distance between the target predicted traveling track and the lane line of the lane in which the first vehicle is located within the preset vertical length based on the target predicted traveling track and the first lane information; and
determining that the motion status of the second vehicle relative to the first vehicle is crossing the lane in which the first vehicle is located if the minimum horizontal distance is less than the first threshold and the maximum horizontal distance is greater than a second threshold, wherein the second threshold is greater than the first threshold; or
determining that the motion status of the second vehicle relative to the first vehicle is maintaining traveling in the same lane as the first vehicle if the maximum horizontal distance is less than a third threshold, wherein the third threshold is less than the first threshold; or
determining that the motion status of the second vehicle relative to the first vehicle is cutting into the lane in which the first vehicle is located or cutting out of the lane in which the first vehicle is located if the minimum horizontal distance is less than the first threshold, and the maximum horizontal distance is greater than the third threshold and less than the second threshold.

5. The method according to claim 4, wherein the method further comprises:
obtaining a first vertical location corresponding to the minimum horizontal distance and a second vertical location corresponding to the maximum horizontal distance; and
when the minimum horizontal distance is less than the first threshold, and the maximum horizontal distance is greater than the third threshold and less than the second threshold, the determining that the motion status of the second vehicle relative to the first vehicle is cutting into the lane in which the first vehicle is located or cutting out of the lane in which the first vehicle is located comprises:
determining that the motion status of the second vehicle relative to the first vehicle is cutting into the lane in which the first vehicle is located if a time at which the second vertical location appears is earlier than a time at which the first vertical location appears in the target predicted traveling track; or
determining that the motion status of the second vehicle relative to the first vehicle is cutting out of the lane in which the first vehicle is located if a time at which the first vertical location appears is earlier than a time at which the second vertical location appears in the target predicted traveling track.

6. The method according to claim 5, wherein the method further comprises:
obtaining a vertical distance between the first vertical location and a first end of the preset vertical length, wherein the vertical distance is a distance between the first vertical location and the first end of the preset vertical length in a direction parallel to the lane line of the lane in which the first vehicle is located, and the first end of the preset vertical length is an end close to the first vehicle; and
determining that the motion status of the second vehicle relative to the first vehicle is cutting into the lane in which the first vehicle is located in a first cutting-in status or cutting out of the lane in which the first vehicle is located in a first cutting-out status if the vertical distance is less than a fourth threshold; or
determining that the motion status of the second vehicle relative to the first vehicle is cutting into the lane in which the first vehicle is located in a second cutting-in status or cutting out of the lane in which the first vehicle is located in a second cutting-out status if the vertical distance is greater than the fourth threshold.

7. The method according to any one of claims 1 to 6, wherein the motion information of the second vehicle comprises a horizontal speed of the second vehicle, and before the determining at least two predicted traveling tracks of the second vehicle based on the second lane information and the location information and the motion information of the second vehicle, the method further comprises:
modifying the horizontal speed comprised in the motion information of the second vehicle based on an average historical horizontal speed of the second vehicle.

8. A vehicle motion status identification apparatus, comprising means adapted to execute the method according to any one of claims 1 to 7.

9. A computer-readable storage medium, comprising computer software instructions, wherein
when the computer software instructions are run in a vehicle motion status identification apparatus or a chip built in the vehicle motion status identification apparatus, the vehicle motion status identification apparatus is enabled to perform the method according to any one of claims 1 to 7.

## Patentansprüche

1. Fahrzeugbewegungsstatusidentifikationsverfahren, dessen Schritte unter Verwendung einer integrierten Hardwarelogikschaltung in einem Prozessorelement implementiert oder in Form von Software implementiert werden, die durch ein Verarbeitungselement aufgerufen wird, und wobei das Verfahren Folgendes umfasst:
Erhalten (S901-S903) von ersten Fahrspurinformationen, zweiten Fahrspurinformationen und Positionsinformationen und Bewegungsinformationen eines zweiten Fahrzeugs, wobei die ersten Fahrspurinformationen Fahrspurinformationen einer Fahrspur sind, in der sich ein erstes Fahrzeug befindet, und die zweiten Fahrspurinformationen mindestens zwei Arten von Folgendem umfassen: Fahrspurinformationen einer Fahrspur, in der sich das zweite Fahrzeug befindet, Fahrspurinformationen einer ersten benachbarten Fahrspur der Fahrspur, in der sich das zweite Fahrzeug befindet, und Fahrspurinformationen einer zweiten benachbarten Fahrspur der Fahrspur, in der sich das zweite Fahrzeug befindet;
Bestimmen (S904) von mindestens zwei vorhergesagten Fahrwegen des zweiten Fahrzeugs basierend auf den zweiten Fahrspurinformationen und den Positionsinformationen und den Bewegungsinformationen des zweiten Fahrzeugs, wobei jeder vorhergesagte Fahrweg jeder Art der Fahrspurinformationen entspricht, die in den zweiten Fahrspurinformationen enthalten sind; und
Bestimmen eines Bewegungsstatus des zweiten Fahrzeugs relativ zu dem ersten Fahrzeug basierend auf den mindestens zwei vorhergesagten Fahrwegen und den ersten Fahrspurinformationen,
wobei das Bestimmen eines Bewegungsstatus des zweiten Fahrzeugs relativ zu dem ersten Fahrzeug basierend auf den mindestens zwei vorhergesagten Fahrwegen und den ersten Fahrspurinformationen Folgendes umfasst:
Bestimmen (S906) eines vorhergesagten Zielfahrwegs des zweiten Fahrzeugs basierend auf den mindestens zwei vorhergesagten Fahrwegen und einer Ähnlichkeit zwischen jedem vorhergesagten Fahrweg und einem historischen Fahrweg des zweiten Fahrzeugs; und
Bestimmen (S907) des Bewegungsstatus des zweiten Fahrzeugs relativ zu dem ersten Fahrzeug basierend auf dem vorhergesagten Zielfahrweg und den ersten Fahrspurinformationen; **dadurch gekennzeichnet, dass** vor dem Bestimmen (S906) eines vorhergesagten Zielfahrwegs des zweiten Fahrzeugs basierend auf den mindestens zwei vorhergesagten Fahrwegen und einer Ähnlichkeit zwischen jedem vorhergesagten Fahrweg und einem historischen Fahrweg des zweiten Fahrzeugs das Verfahren ferner Folgendes umfasst:
Erhalten eines ersten horizontalen Koordinatenvektors des historischen Fahrwegs des zweiten Fahrzeugs in einer ersten voreingestellten Periode, wobei der erste horizontale Koordinatenvektor verwendet wird, um einen Abstandsvektor zwischen dem historischen Fahrweg und einer Fahrspurlinie der Fahrspur, in der sich das zweite Fahrzeug befindet, anzugeben; und
Erhalten eines zweiten horizontalen Koordinatenvektors jedes vorhergesagten Fahrwegs in einer zweiten voreingestellten Periode, und Bestimmen der Ähnlichkeit zwischen jedem vorhergesagten Fahrweg und dem historischen Fahrweg basierend auf dem zweiten horizontalen Koordinatenvektor und dem ersten horizontalen Koordinatenvektor, wobei der zweite horizontale Koordinatenvektor verwendet wird, um einen Abstandsvektor zwischen jedem vorhergesagten Fahrweg und der Fahrspurlinie der Fahrspur, in der sich das zweite Fahrzeug befindet, anzugeben.

2. Verfahren nach Anspruch 1, wobei das Bestimmen (S907) eines vorhergesagten Zielfahrwegs des zweiten Fahrzeugs basierend auf den mindestens zwei vorhergesagten Fahrwegen und einer Ähnlichkeit zwischen jedem vorhergesagten Fahrweg und einem historischen Fahrweg des zweiten Fahrzeugs Folgendes umfasst:
Vorhersagen einer Ähnlichkeit zwischen jedem vorhergesagten Fahrweg und einem tatsächlichen Fahrweg des zweiten Fahrzeugs basierend auf der Ähnlichkeit zwischen jedem vorhergesagten Fahrweg und dem historischen Fahrweg des zweiten Fahrzeugs; und
Bestimmen des vorhergesagten Zielfahrwegs des zweiten Fahrzeugs basierend auf den mindestens zwei vorhergesagten Fahrwegen und der Ähnlichkeit zwischen jedem vorhergesagten Fahrweg und dem tatsächlichen Fahrweg des zweiten Fahrzeugs.

3. Verfahren nach einem der Ansprüche 1 bis 2, wobei das Bestimmen des Bewegungsstatus des zweiten Fahrzeugs relativ zu dem ersten Fahrzeug basierend auf dem vorhergesagten Zielfahrweg und den ersten Fahrspurinformationen Folgendes umfasst:
Bestimmen eines minimalen horizontalen Abstands, der zwischen dem vorhergesagten Zielfahrweg und einer Fahrspurlinie der Fahrspur, in der sich das erste Fahrzeug befindet, vorhanden ist und der innerhalb einer voreingestellten vertikalen Länge liegt, basierend auf dem vorhergesagten Zielfahrweg und den ersten Fahrspurinformationen; und
Bestimmen, dass der Bewegungsstatus des zweiten Fahrzeugs relativ zu dem ersten Fahrzeug ein Beibehalten eines Fahrens in einer anderen Fahrspur als das erste Fahrzeug ist, falls der minimale horizontale Abstand größer als ein erster Schwellenwert ist.

4. Verfahren nach Anspruch 3, wobei das Verfahren ferner Folgendes umfasst:
Bestimmen eines maximalen horizontalen Abstands zwischen dem vorhergesagten Zielfahrweg und der Fahrspurlinie der Fahrspur, in der sich das erste Fahrzeug befindet, innerhalb der voreingestellten vertikalen Länge basierend auf dem vorhergesagten Zielfahrweg und den ersten Fahrspurinformationen; und
Bestimmen, dass der Bewegungsstatus des zweiten Fahrzeugs relativ zu dem ersten Fahrzeug ein Überqueren der Fahrspur, in der sich das erste Fahrzeug befindet, ist, falls der minimale horizontale Abstand kleiner als der erste Schwellenwert ist und der maximale horizontale Abstand größer als ein zweiter Schwellenwert ist, wobei der zweite Schwellenwert größer als der erste Schwellenwert ist; oder
Bestimmen, dass der Bewegungsstatus des zweiten Fahrzeugs relativ zu dem ersten Fahrzeug ein Beibehalten eines Fahrens in der gleichen Fahrspur wie das erste Fahrzeug ist, falls der maximale horizontale Abstand kleiner als ein dritter Schwellenwert ist, wobei der dritte Schwellenwert kleiner als der erste Schwellenwert ist; oder
Bestimmen, dass der Bewegungsstatus des zweiten Fahrzeugs relativ zu dem ersten Fahrzeug ein Einscheren in die Fahrspur, in der sich das erste Fahrzeug befindet, oder ein Ausscheren aus der Fahrspur, in der sich das erste Fahrzeug befindet, ist, falls der minimale horizontale Abstand kleiner als der erste Schwellenwert ist und der maximale horizontale Abstand größer als der dritte Schwellenwert und kleiner als der zweite Schwellenwert ist.

5. Verfahren nach Anspruch 4, wobei das Verfahren ferner Folgendes umfasst:
Erhalten einer ersten vertikalen Position, die dem minimalen horizontalen Abstand entspricht, und einer zweiten vertikalen Position, die dem maximalen horizontalen Abstand entspricht; und
wobei, wenn der minimale horizontale Abstand kleiner als der erste Schwellenwert ist und der maximale horizontale Abstand größer als der dritte Schwellenwert und kleiner als der zweite Schwellenwert ist, das Bestimmen, dass der Bewegungsstatus des zweiten Fahrzeugs relativ zu dem ersten Fahrzeug ein Einscheren in die Fahrspur, in der sich das erste Fahrzeug befindet, oder ein Ausscheren aus der Fahrspur, in der sich das erste Fahrzeug befindet, ist, Folgendes umfasst:
Bestimmen, dass der Bewegungsstatus des zweiten Fahrzeugs relativ zu dem ersten Fahrzeug ein Einscheren in die Fahrspur, in der sich das erste Fahrzeug befindet, ist, falls in dem vorhergesagten Zielfahrweg eine Zeit, zu der die zweite vertikale Position auftritt, früher ist als eine Zeit, zu der die erste vertikale Position auftritt; oder
Bestimmen, dass der Bewegungsstatus des zweiten Fahrzeugs relativ zu dem ersten Fahrzeug ein Ausscheren aus der Fahrspur, in der sich das erste Fahrzeug befindet, ist, falls in dem vorhergesagten Zielfahrweg eine Zeit, zu der die erste vertikale Position auftritt, früher ist als eine Zeit, zu der die zweite vertikale Position auftritt.

6. Verfahren nach Anspruch 5, wobei das Verfahren ferner Folgendes umfasst:
Erhalten eines vertikalen Abstands zwischen der ersten vertikalen Position und einem ersten Ende der voreingestellten vertikalen Länge, wobei der vertikale Abstand ein Abstand zwischen der ersten vertikalen Position und dem ersten Ende der voreingestellten vertikalen Länge in einer Richtung parallel zur Fahrspurlinie der Fahrspur, in der sich das erste Fahrzeug befindet, ist und das erste Ende der voreingestellten vertikalen Länge ein Ende nahe dem ersten Fahrzeug ist; und
Bestimmen, dass der Bewegungsstatus des zweiten Fahrzeugs relativ zu dem ersten Fahrzeug ein Einscheren in die Fahrspur, in der sich das erste Fahrzeug befindet, in einem ersten Einscherstatus oder ein Ausscheren aus der Fahrspur, in der sich das erste Fahrzeug befindet, in einem ersten Ausscherstatus ist, falls der vertikale Abstand kleiner als ein vierter Schwellenwert ist; oder
Bestimmen, dass der Bewegungsstatus des zweiten Fahrzeugs relativ zu dem ersten Fahrzeug ein Einscheren in die Fahrspur, in der sich das erste Fahrzeug befindet, in einem zweiten Einscherstatus oder ein Ausscheren aus der Fahrspur, in der sich das erste Fahrzeug befindet, in einem zweiten Ausscherstatus ist, falls der vertikale Abstand größer als der vierte Schwellenwert ist.

7. Verfahren nach einem der Ansprüche 1 bis 6, wobei die Bewegungsinformationen des zweiten Fahrzeugs eine horizontale Geschwindigkeit des zweiten Fahrzeugs umfassen, und wobei vor dem Bestimmen von mindestens zwei vorhergesagten Fahrwegen des zweiten Fahrzeugs basierend auf den zweiten Fahrspurinformationen und den Positionsinformationen und den Bewegungsinformationen des zweiten Fahrzeugs das Verfahren ferner Folgendes umfasst:
Modifizieren der horizontalen Geschwindigkeit, die in den Bewegungsinformationen des zweiten Fahrzeugs enthalten ist, basierend auf einer durchschnittlichen historischen horizontalen Geschwindigkeit des zweiten Fahrzeugs.

8. Fahrzeugbewegungsstatusidentifikationsvorrichtung, die Mittel umfasst, die dazu geeignet sind, das Verfahren nach einem der Ansprüche 1 bis 7 auszuführen.

9. Computerlesbares Speichermedium, das Computersoftwareanweisungen umfasst, wobei,
wenn die Computersoftwareanweisungen in einer Fahrzeugbewegungsstatusidentifikationsvorrichtung oder einem in die Fahrzeugbewegungsstatusidentifikationsvorrichtung integrierten Chip ausgeführt werden, der Fahrzeugbewegungsstatusidentifikationsvorrichtung ermöglicht wird, das Verfahren nach einem der Ansprüche 1 bis 7 durchzuführen.

## Revendications

1. Procédé d'identification d'état de mouvement de véhicule, dont les étapes sont mises en œuvre en utilisant un circuit logique intégré matériel dans un élément processeur ou mises en œuvre sous la forme d'un logiciel appelé par un élément de traitement, et dans lequel le procédé comprend :
l'obtention (S901-S903) de premières informations de voie, de secondes informations de voie, et d'informations de position et d'informations de mouvement d'un second véhicule, dans lequel les premières informations de voie sont des informations de voie d'une voie dans laquelle un premier véhicule est positionné, et les secondes informations de voie comprennent au moins deux types de ce qui suit : des informations de voie d'une voie dans laquelle le second véhicule est positionné, des informations de voie d'une première voie adjacente de la voie dans laquelle le second véhicule est positionné, et des informations de voie d'une seconde voie adjacente de la voie dans laquelle le second véhicule est positionné ;
la détermination (S904) d'au moins deux trajets de déplacement prédits du second véhicule sur la base des secondes informations de voie et des informations de position et des informations de mouvement du second véhicule, dans lequel chaque trajet de déplacement prédit correspond à chaque type des informations de voie comprises dans les secondes informations de voie ; et
la détermination d'un état de mouvement du second véhicule relativement au premier véhicule sur la base des au moins deux trajets de déplacement prédits et des premières informations de voie,
dans lequel la détermination d'un état de mouvement du second véhicule relativement au premier véhicule sur la base des au moins deux trajets de déplacement prédits et des premières informations de voie comprend :
la détermination (S906) d'un trajet de déplacement prédit cible du second véhicule sur la base des au moins deux trajets de déplacement prédits et d'une similarité entre chaque trajet de déplacement prédit et un trajet de déplacement historique du second véhicule ; et
la détermination (S907) de l'état de mouvement du second véhicule relativement au premier véhicule sur la base du trajet de déplacement prédit cible et des premières informations de voie ; **caractérisé en ce que**, avant la détermination (S906) d'un trajet de déplacement prédit cible du second véhicule sur la base des au moins deux trajets de déplacement prédits et d'une similarité entre chaque trajet de déplacement prédit et un trajet de déplacement historique du second véhicule, le procédé comprend en outre :
l'obtention d'un premier vecteur de coordonnées horizontales du trajet de déplacement historique du second véhicule durant une première période prédéfinie, dans lequel le premier vecteur de coordonnées horizontales est utilisé pour indiquer un vecteur de distance entre le trajet de déplacement historique et une ligne de délimitation de voie de la voie dans laquelle le second véhicule est positionné ; et
l'obtention d'un second vecteur de coordonnées horizontales de chaque trajet de déplacement prédit durant une seconde période prédéfinie, et la détermination de la similarité entre chaque trajet de déplacement prédit et le trajet de déplacement historique sur la base du second vecteur de coordonnées horizontales et du premier vecteur de coordonnées horizontales, dans lequel le second vecteur de coordonnées horizontales est utilisé pour indiquer un vecteur de distance entre chaque trajet de déplacement prédit et la ligne de délimitation de voie de la voie dans laquelle le second véhicule est positionné.

2. Procédé selon la revendication 1, dans lequel la détermination (S907) d'un trajet de déplacement prédit cible du second véhicule sur la base des au moins deux trajets de déplacement prédits et d'une similarité entre chaque trajet de déplacement prédit et un trajet de déplacement historique du second véhicule comprend :
la prédiction d'une similarité entre chaque trajet de déplacement prédit et un trajet de déplacement réel du second véhicule sur la base de la similarité entre chaque trajet de déplacement prédit et le trajet de déplacement historique du second véhicule ; et
la détermination du trajet de déplacement prédit cible du second véhicule sur la base des au moins deux trajets de déplacement prédits et de la similarité entre chaque trajet de déplacement prédit et le trajet de déplacement réel du second véhicule.

3. Procédé selon l'une quelconque des revendications 1 et 2, dans lequel la détermination de l'état de mouvement du second véhicule relativement au premier véhicule sur la base du trajet de déplacement prédit cible et des premières informations de voie comprend :
la détermination d'une distance horizontale minimum qui est entre le trajet de déplacement prédit cible et une ligne de délimitation de voie de la voie dans laquelle le premier véhicule est positionné et qui est dans les limites d'une longueur verticale prédéfinie sur la base du trajet de déplacement prédit cible et des premières informations de voie ; et
la détermination que l'état de mouvement du second véhicule relativement au premier véhicule est le maintien d'un déplacement dans une voie différente de celle du premier véhicule si la distance horizontale minimum est supérieure à un premier seuil.

4. Procédé selon la revendication 3, dans lequel le procédé comprend en outre :
la détermination d'une distance horizontale maximum entre le trajet de déplacement prédit cible et la ligne de délimitation de voie de la voie dans laquelle le premier véhicule est positionné dans les limites de la longueur verticale prédéfinie sur la base du trajet de déplacement prédit cible et des premières informations de voie ; et
la détermination que l'état de mouvement du second véhicule relativement au premier véhicule est le franchissement de la voie dans laquelle le premier véhicule est positionné si la distance horizontale minimum est inférieure au premier seuil et la distance horizontale maximum est supérieure à un deuxième seuil, dans lequel le deuxième seuil est supérieur au premier seuil ; ou
la détermination que l'état de mouvement du second véhicule relativement au premier véhicule est le maintien du déplacement dans la même voie que le premier véhicule si la distance horizontale maximum est inférieure à un troisième seuil, dans lequel le troisième seuil est inférieur au premier seuil ; ou
la détermination que l'état de mouvement du second véhicule relativement au premier véhicule est en train d'empiéter dans la voie dans laquelle le premier véhicule est positionné ou est en train d'empiéter hors de la voie dans laquelle le premier véhicule est positionné si la distance horizontale minimum est inférieure au premier seuil, et la distance horizontale maximum est supérieure au troisième seuil et inférieure au deuxième seuil.

5. Procédé selon la revendication 4, dans lequel le procédé comprend en outre :
l'obtention d'une première position verticale correspondant à la distance horizontale minimum et d'une seconde position verticale correspondant à la distance horizontale maximum ; et
lorsque la distance horizontale minimum est inférieure au premier seuil, et la distance horizontale maximum est supérieure au troisième seuil et inférieure au deuxième seuil, la détermination que l'état de mouvement du second véhicule relativement au premier véhicule est en train d'empiéter dans la voie dans laquelle le premier véhicule est positionné ou est en train d'empiéter hors de la voie dans laquelle le premier véhicule est positionné comprend :
la détermination que l'état de mouvement du second véhicule relativement au premier véhicule est en train d'empiéter dans la voie dans laquelle le premier véhicule est positionné si un instant auquel la seconde position verticale apparaît est antérieur à un instant auquel la première position verticale apparaît dans le trajet de déplacement prédit cible ; ou
la détermination que l'état de mouvement du second véhicule relativement au premier véhicule est en train d'empiéter hors de la voie dans laquelle le premier véhicule est positionné si un instant auquel la première position verticale apparaît est antérieur à un instant auquel la seconde position verticale apparaît dans le trajet de déplacement prédit cible.

6. Procédé selon la revendication 5, dans lequel le procédé comprend en outre :
l'obtention d'une distance verticale entre la première position verticale et une première extrémité de la longueur verticale prédéfinie, dans lequel la distance verticale est une distance entre la première position verticale et la première extrémité de la longueur verticale prédéfinie dans une direction parallèle à la ligne de délimitation de voie de la voie dans laquelle le premier véhicule est positionné, et la première extrémité de la longueur verticale prédéfinie est une extrémité proche du premier véhicule ; et
la détermination que l'état de mouvement du second véhicule relativement au premier véhicule est en train d'empiéter dans la voie dans laquelle le premier véhicule est positionné dans un premier état d'empiétement au dedans ou est en train d'empiéter hors de la voie dans laquelle le premier véhicule est positionné dans un premier état d'empiétement au dehors si la distance verticale est inférieure à un quatrième seuil ; ou
la détermination que l'état de mouvement du second véhicule relativement au premier véhicule est en train d'empiéter dans la voie dans laquelle le premier véhicule est positionné dans un second état d'empiétement au dedans ou est en train d'empiéter hors de la voie dans laquelle le premier véhicule est positionné dans un second état d'empiétement au dehors si la distance verticale est supérieure au quatrième seuil.

7. Procédé selon l'une quelconque des revendications 1 à 6, dans lequel les informations de mouvement du second véhicule comprennent une vitesse horizontale du second véhicule, et, avant la détermination d'au moins deux trajets de déplacement prédits du second véhicule sur la base des secondes informations de voie et des informations de position et des informations de mouvement du second véhicule, le procédé comprend en outre :
la modification de la vitesse horizontale comprise dans les informations de mouvement du second véhicule sur la base d'une vitesse horizontale historique moyenne du second véhicule.

8. Appareil d'identification d'état de mouvement de véhicule, comprenant des moyens adaptés pour exécuter le procédé selon l'une quelconque des revendications 1 à 7.

9. Support de stockage lisible par ordinateur, comprenant des instructions de logiciel d'ordinateur, dans lequel
lorsque les instructions de logiciel d'ordinateur sont exploitées dans un appareil d'identification d'état de mouvement de véhicule ou une puce incorporée dans l'appareil d'identification d'état de mouvement de véhicule, l'appareil d'identification d'état de mouvement de véhicule est en mesure de réaliser le procédé selon l'une quelconque des revendications 1 à 7.
